# EUROPEAN PATENT APPLICATION

(11) **EP 4 712 673 A1**
(43) Date of publication of application: **18.03.2026**
(21) Application number: 24803423.3
(22) Date of filing: 30.04.2024
(51) Int. Cl.: H04W 76/14, H04W 4/70, H04W 8/00, H04W 76/19

(54) **COMMUNICATION SYSTEM**

(30) Priority: 10.05.2023 JP 2023077812
(71) Applicant: MITSUBISHI ELECTRIC CORPORATION, Chiyoda-ku Tokyo 100-8310 (JP)
(72) Inventor: SHIMODA, Tadahiro, Tokyo 100-8310 (JP); MOCHIZUKI, Mitsuru, Tokyo 100-8310 (JP)
(74) Representative: Mewburn Ellis LLP
(86) International application number: PCT/JP2024/016670
(87) International publication number: WO 2024/232311

(57) **Abstract**

A communication system includes a base station configured to support a fifth generation radio access system, communication terminals configured to be connected to the base station, and a device configured to be connected to the base station in which, in a case where a connection between the device and the communication terminal is in a disconnected state, a plurality of the communication terminals perform processing to search for the device, and a communication terminal that has been successful in searching for the device operates as a communication terminal being a connection target of the device.

## Description

### Technical Field

The present disclosure relates to a radio communication technology.

### Background

In the 3rd Generation Partnership Project (3GPP) being a standard organization of mobile communication systems, a fifth generation (which may be hereinafter referred to as "5G") radio access system is studied (for example, NPL 2) as a successor to Long Term Evolution (LTE) and Long Term Evolution Advanced (LTE-A) being one of fourth generation radio access systems (see NPL 1). A technology of 5G radio sections is referred to as "New Radio Access Technology" ("New Radio" is abbreviated to "NR"). The NR system has been studied, based on the LTE system and the LTE-A system.

For example, in Europe, requirements for 5G are summarized in an organization named METIS (see NPL 3). The 5G radio access system is required to implement lower power consumption and lower apparatus costs, making its system capacity 1000 times as high as, data transmission rate 100 times as high as, data processing delay one fifth (1/5) of, and number of simultaneously connected communication terminals 100 times as large as those of the LTE system (see NPL 3).

To satisfy these requirements, in 3GPP, standardization of 5G has been studied (see NPLs 4 to 23).

As NR access schemes, orthogonal frequency division multiplexing (OFDM) is used in a downlink direction, and OFDM and discrete Fourier transform-spread-OFDM (DFT-s-OFDM) are used in an uplink direction. As with LTE and LTE-A, the 5G system employs only a packet communication method, without including circuit switching.

In NR, frequencies higher than those in LTE are available in order to enhance the transmission rate and reduce the processing delay.

In NR in which frequencies higher than those in LTE may be used, cell coverage is secured by forming a narrow beam-like transmission and reception range (beamforming) and changing directions of beams (beam sweeping).

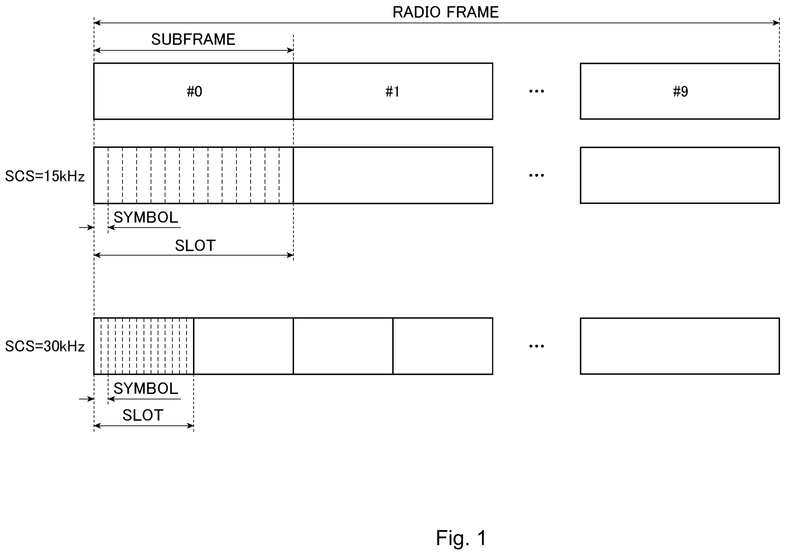

Decisions on a frame configuration in the NR system in 3GPP described in NPL 1 (Section 5) will be described with reference to Fig. 1. Fig. 1 is an explanatory diagram illustrating a configuration of radio frames used in an NR communication system. In Fig. 1, one radio frame has 10 ms. The radio frame is divided into 10 subframes having equal sizes. The frame configuration in NR supports one or a plurality of numerologies, that is, one or a plurality of subcarrier spacings (SCSs). In NR, one subframe includes 1 ms and one slot includes 14 symbols, regardless of the subcarrier spacing. The number of slots included in one subframe is one with the subcarrier spacing of 15 kHz, and the number of slots with other subcarrier spacings increases in proportion to the subcarrier spacing (see NPL 11 (3GPP TS 38.211)).

Decisions on a channel configuration in the NR system in 3GPP are described in NPL 2 (Section 5) and NPL 11.

A physical broadcast channel (PBCH) is a downlink transmission channel from a base station apparatus (which may be hereinafter simply referred to as a "base station") to a communication terminal apparatus (which may be hereinafter referred to as a "communication terminal" or a "terminal") such as a mobile terminal apparatus (which may be hereinafter simply referred to as a "mobile terminal"). The PBCH is transmitted together with a downlink synchronization signal.

The downlink synchronization signal in NR includes a primary synchronization signal (P-SS) and a secondary synchronization signal (S-SS). The synchronization signal is transmitted as a synchronization signal burst (which may be hereinafter referred to as an SS burst) from the base station with predetermined periodicity for predetermined duration. The SS burst includes a synchronization signal block (which may be hereinafter referred to as an SS block) of each beam of the base station.

The base station transmits, by changing the beams, the SS block of each beam within the duration of the SS burst. The SS block includes the P-SS, the S-SS, and the PBCH.

A physical downlink control channel (PDCCH) is a downlink transmission channel from the base station to the communication terminal. The PDCCH carries downlink control information (DCI). The DCI includes resource allocation information of a downlink shared channel (DL-SCH) being one of transport channels to be described later, resource allocation information of a paging channel (PCH) being one of transport channels to be described later, hybrid automatic repeat request (HARQ) information on the DL-SCH, and the like. The DCI may include an uplink scheduling grant. The DCI may include an acknowledgement (Ack)/negative acknowledgement (Nack) being a response signal for uplink transmission. For flexible switching of DL/UL in the slot, the DCI may include a slot format indication (SFI). The PDCCH or the DCI is also referred to as an L1/L2 control signal.

In NR, a time/frequency domain as candidates including the PDCCH is provided. The domain is referred to as a control resource set (CORESET). The communication terminal monitors the CORESET and acquires the PDCCH.

A physical downlink shared channel (PDSCH) is a downlink transmission channel from the base station to the communication terminal. To the PDSCH, a downlink shared channel (DL-SCH) being a transport channel and a PCH being a transport channel are mapped.

A physical uplink control channel (PUCCH) is an uplink transmission channel from the communication terminal to the base station. The PUCCH carries uplink control information (UCI). The UCI includes an Ack/Nack being a response signal for downlink transmission, channel state information (CSI), a scheduling request (SR), and the like. The CSI includes a rank indicator (RI), a precoding matrix indicator (PMI), and a channel quality indicator (CQI) report. The RI is rank information of a channel matrix in Multiple Input Multiple Output (MIMO). The PMI is information of a precoding weight matrix used in MIMO. The CQI is quality information indicating received data quality or communication path quality. The UCI may be carried on a PUSCH to be described later. The PUCCH or the UCI is also referred to as an L1/L2 control signal.

A physical uplink shared channel (PUSCH) is an uplink transmission channel from the communication terminal to the base station. To the PUSCH, an uplink shared channel (UL-SCH) being one of transport channels is mapped.

A physical random access channel (PRACH) is an uplink transmission channel from the communication terminal to the base station. The PRACH carries a random access preamble.

A downlink reference signal (RS) is known symbols in the NR communication system. The following four types of downlink reference signals are defined. They are a data demodulation reference signal (DM-RS) being a UE-specific reference signal, a phase tracking reference signal (PT-RS), a positioning reference signal (PRS), and a channel state information reference signal (CSI-RS). Measurement of a physical layer of the communication terminal includes reference signal received power (RSRP) measurement and reference signal received quality (RSRQ) measurement.

An uplink reference signal is also similarly known symbols in the NR communication system. The following three types of uplink reference signals are defined. They are a data demodulation reference signal (DM-RS), a phase tracking reference signal (PT-RS), and a sounding reference signal (SRS).

Transport channels described in NPL 2 (Section 5) will be described. A broadcast channel (BCH), among downlink transport channels, is broadcast to the entire coverage of the base station (cell). The BCH is mapped to the physical broadcast channel (PBCH).

HARQ retransmission control is applied to the downlink shared channel (DL-SCH). The DL-SCH can be broadcast to the entire coverage of the base station (cell). The DL-SCH supports dynamic or semi-static resource allocation. The semi-static resource allocation is also referred to as semi-persistent scheduling. The DL-SCH supports discontinuous reception (DRX) of the communication terminal in order to implement low power consumption of the communication terminal. The DL-SCH is mapped to the physical downlink shared channel (PDSCH).

The paging channel (PCH) supports DRX of the communication terminal in order to enable low power consumption of the communication terminal. The PCH is required to be broadcast to the entire coverage of the base station (cell). The PCH is mapped to physical resources that can be dynamically used for traffic, such as the physical downlink shared channel (PDSCH).

HARQ retransmission control is applied to the uplink shared channel (UL-SCH) among uplink transport channels. The UL-SCH supports dynamic or semi-static resource allocation. The semi-static resource allocation is also referred to as a configured grant. The UL-SCH is mapped to the physical uplink shared channel (PUSCH).

A random access channel (RACH) is limited to control information. The RACH has a risk of collision. The RACH is mapped to the physical random access channel (PRACH).

HARQ will be described. HARQ is a technology for enhancing communication quality of a transmission path, using a combination of an automatic repeat request (ARQ) and error correction (forward error correction). HARQ has an advantage in that, owing to retransmission, error correction effectively functions even for a transmission path with varying communication quality. Particularly, in retransmission, it is also possible to further enhance quality by combining reception results of first transmission and reception results of retransmission.

An example of a method of retransmission will be described. In a case in which a receiver fails to correctly decode received data, that is, a cyclic redundancy check (CRC) error occurs in the receiver (CRC = NG), a "Nack" is transmitted from the receiver to a transmitter. The transmitter that has received the "Nack" retransmits data. In a case in which the receiver successfully correctly decodes received data, that is, a CRC error does not occur in the receiver (CRC = OK), an "Ack" is transmitted from the receiver to the transmitter. The transmitter that has received the "Ack" transmits subsequent data.

Another example of a method of retransmission will be described. In a case in which a CRC error occurs in the receiver, a retransmission request is performed from the receiver to the transmitter. The retransmission request is performed using toggling of a new data indicator (NDI). The transmitter that has received the retransmission request retransmits data. In a case in which a CRC error does not occur in the receiver, the retransmission request is not performed. In a case in which the transmitter does not receive the retransmission request for a predetermined time, the transmitter considers that no CRC error has occurred in the receiver.

Logical channels described in NPL 1 (Section 6) will be described. A broadcast control channel (BCCH) is a downlink channel for broadcasting system control information. The BCCH being a logical channel is mapped to the broadcast channel (BCH) or the downlink shared channel (DL-SCH) being transport channels.

A paging control channel (PCCH) is a downlink channel for transmitting paging information and system information change. The PCCH being a logical channel is mapped to the paging channel (PCH) being a transport channel.

A common control channel (CCCH) is a channel for transmitting control information between the communication terminal and the base station. The CCCH is used in a case in which the communication terminal does not have RRC connection with the network. In the downlink direction, the CCCH is mapped to the downlink shared channel (DL-SCH) being a transport channel. In the uplink direction, the CCCH is mapped to the uplink shared channel (UL-SCH) being a transport channel.

A dedicated control channel (DCCH) is a channel for transmitting dedicated control information between the communication terminal and the network on a one-to-one basis. The DCCH is used in a case in which the communication terminal has RRC connection with the network. The DCCH is mapped to the uplink shared channel (UL-SCH) in the uplink, and is mapped to the downlink shared channel (DL-SCH) in the downlink.

A dedicated traffic channel (DTCH) is a channel for one-to-one communication to the communication terminal for transmission of user information. The DTCH is present in both of the uplink and the downlink. The DTCH is mapped to the uplink shared channel (UL-SCH) in the uplink, and is mapped to the downlink shared channel (DL-SCH) in the downlink.

Location tracking of the communication terminal is performed in a unit of an area consisting of one or more cells. Location tracking is performed to enable tracking the location of the communication terminal even in an idle state, and enable calling the communication terminal, that is, enable the communication terminal to receive a call. The area for location tracking of the communication terminal is referred to as a tracking area (TA).

NR supports calling the communication terminal in a range in a unit of an area smaller than the tracking area. The range is referred to as a RAN notification area (RNA). Paging of the communication terminal in an RRC_INACTIVE state to be described later is performed in the range.

In NR, carrier aggregation (CA) is studied, in which two or more component carriers (CCs) are aggregated to support wide frequency bandwidths (transmission bandwidths). CA is described in NPL 1.

In a case in which CA is configured, the UE being a communication terminal has a single RRC connection with the network (NW). In RRC connection, one serving cell provides Non-Access Stratum (NAS) mobility information and security input. The cell is referred to as a primary cell (PCell). A secondary cell (SCell) is configured to form a group of serving cells with the PCell, according to a UE capability. The group of serving cells consisting of one PCell and one or more SCells is configured for one UE.

3GPP has dual connectivity (abbreviated to DC) or the like in which the UE connects to two base stations and perform communication, in order to further increase communication capacity. DC is described in NPLs 1 and 22.

One of the base stations performing dual connectivity (DC) may be referred to as a "master base station (master node (MN))", and the other may be referred to as a "secondary base station (secondary node (SN))". The serving cells configured by the master base station may be collectively referred to as a master cell group (MCG), and the serving cells configured by the secondary base station may be collectively referred to as a secondary cell group (SCG). In DC, a primary cell in the MCG or the SCG is referred to as a special cell (SpCell or SPCell). The special cell in the MCG is referred to as a PCell, and the special cell in the SCG is referred to as a primary SCG cell (PSCell).

In NR, the base station configures a part of the carrier frequency band (the part may be hereinafter referred to as a bandwidth part (BWP)) for the UE in advance, and the UE performs transmission and reception to and from the base station in the BWP, to thereby reduce power consumption in the UE.

In 3GPP, support of services (which may be applications) using sidelink (Side Link, SL) communication (also referred to as PC5 communication) both in an Evolved Packet System (EPS) and a 5G core system to be described later is studied (see NPLs 1, 2, and 26 to 28). In SL communication, communication is performed between the terminals. Examples of the services using SL communication include a vehicle-to-everything (V2X) service, a proximity-based service, and the like. The SL communication proposes not only direct communication between the terminals but also communication between the UE and the NW via relay (see NPLs 26 and 28).

Physical channels used in the SL (see NPLs 2 and 11) will be described. A physical sidelink broadcast channel (PSBCH) carries information on a system and synchronization, and is transmitted from the UE.

A physical sidelink control channel (PSCCH) carries control information from the UE for sidelink communication and V2X sidelink communication.

A physical sidelink shared channel (PSSCH) carries data from the UE for sidelink communication and V2X sidelink communication.

A physical sidelink feedback channel (PSFCH) carries sidelink HARQ feedback from the UE that has received PSSCH transmission to the UE that has transmitted the PSSCH.

Transport channels used in the SL (see NPL 1) will be described. A sidelink broadcast channel (SL-BCH) has a predetermined transport format, and is mapped to the PSBCH being a physical channel.

A sidelink shared channel (SL-SCH) supports broadcast transmission. The SL-SCH supports both of UE autonomous resource selection and resource allocation scheduled by the base station. UE autonomous resource selection has a risk of collision, and in a case in which dedicated resources are allocated to the UE by the base station, there is no collision. The SL-SCH supports dynamic link adaptation by changing transmission power, modulation, and coding. The SL-SCH is mapped to the PSSCH being a physical channel.

Logical channels used in the SL (see NPL 2) will be described. A sidelink broadcast control channel (SBCCH) is a sidelink channel for broadcasting sidelink system information from one UE to another UE. The SBCCH is mapped to the SL-BCH being a transport channel.

A sidelink traffic channel (STCH) is a one-to-many sidelink traffic channel for transmitting user information from one UE to another UE. The STCH is used only by the UE having a sidelink communication capability and the UE having a V2X sidelink communication capability. One-to-one communication between the UEs having two sidelink communication capabilities is also implemented on the STCH. The STCH is mapped to the SL-SCH being a transport channel.

A sidelink control channel (SCCH) is a sidelink control channel for transmitting control information from one UE to another UE. The SCCH is mapped to the SL-SCH being a transport channel.

In LTE, only broadcast is supported in the SL communication. In NR, support of unicast and groupcast in addition to broadcast in the SL communication is studied (see NPL 27 (3GPP TS 23.287)).

In SL unicast communication and groupcast communication, HARQ feedback (Ack/Nack), a CSI report, and the like are supported.

In 3GPP, an integrated access and backhaul (IAB) is studied, in which both of an access link being a link between the UE and the base station and a backhaul link being a link between the base stations are performed wirelessly (see NPLs 2, 20, and 29).

Some new technologies are required for the mobile communication system. For example, new technologies are required to introduce, into the mobile communication system, Internet of Things (IoT) devices having ultra-low power consumption, such as battery-less devices and devices that do not require replacement or charging and are capable of communication only with an energy storing function. In 3GPP, discussion on such new technologies has begun (NPLs 30, 31, 32, and 33).

### Citation List

### Non Patent Literature

[NPL 1] 3GPP TS 36.300 V17.2.0
[NPL 2] 3GPP TS 38.300 V17.2.0
[NPL 3] "Scenarios, requirements and KPIs for 5G mobile and wireless system", ICT-317669-METIS/D1.1
[NPL 4] 3GPP TR 23.799 V14.0.0
[NPL 5] 3GPP TR 38.801 V14.0.0
[NPL 6] 3GPP TR 38.802 V14.2.0
[NPL 7] 3GPP TR 38.804 V14.0.0
[NPL 8] 3GPP TR 38.912 V16.0.0
[NPL 9] 3GPP RP-172115
[NPL 10] 3GPP TS 23.501 V17.6.0
[NPL 11] 3GPP TS 38.211 V17.3.0
[NPL 12] 3GPP TS 38.212 V17.3.0
[NPL 13] 3GPP TS 38.213 V17.3.0
[NPL 14] 3GPP TS 38.214 V17.3.0
[NPL 15] 3GPP TS 38.321 V17.2.0
[NPL 16] 3GPP TS 38.322 V17.1.0
[NPL 17] 3GPP TS 38.323 V17.2.0
[NPL 18] 3GPP TS 37.324 V17.0.0
[NPL 19] 3GPP TS 38.331 V17.2.0
[NPL 20] 3GPP TS 38.401 V17.2.0
[NPL 21] 3GPP TS 38.413 V17.2.0
[NPL 22] 3GPP TS 37.340 V17.2.0
[NPL 23] 3GPP TS 38.423 V17.2.0
[NPL 24] 3GPP TS 38.305 V17.2.0
[NPL 25] 3GPP TS 23.273 V17.6.0
[NPL 26] 3GPP TR 23.703 V12.0.0
[NPL 27] 3GPP TS 23.287 V17.4.0
[NPL 28] 3GPP TS 23.303 V17.0.0
[NPL 29] 3GPP TS 38.340 V17.2.0
[NPL 30] 3GPP RP-223396
[NPL 31] 3GPP RP-222335
[NPL 32] 3GPP RP-222126
[NPL 33] 3GPP RP-222069
[NPL 34] 3GPP RP-222440
[NPL 35] 3GPP TS 22.261 V19.1.0

### SUMMARY

### Technical Problem

In the mobile communication system, communication for various services is performed, and thus it is assumed that an enormous number of IoT devices such as wearable terminals and sensors are to be used in the future. Thus, IoT devices having ultra-low power consumption, such as battery-less devices and devices that do not require replacement or charging and are capable of communication only with an energy storing function, are required to be used. New technologies for introducing such IoT devices having ultra-low power consumption into the mobile communication system are required. In 3GPP, discussion on the new technologies has begun (NPLs 30, 31, 32, and 33). Meanwhile, it is considered that movement of such an IoT device having ultra-low power consumption changes a UE connectable to the IoT device. However, processing related to the change of the UE is not disclosed. Thus, movement of the IoT device disconnects a connection with the UE, which poses a problem that, after the disconnection, communication between the IoT device and the communication system cannot be performed.

In view of the problem, the present disclosure has one example object to implement a communication system for enabling communication with an IoT device having ultra-low power consumption to be continued.

### Solution to Problem

In order to solve the problem to attain the example object, the present disclosure includes a base station configured to support a fifth generation radio access system, communication terminals configured to be connected to the base station, and a device configured to be connected to the base station. In a case where a connection between the device and the communication terminal is in a disconnected state, a plurality of the communication terminals perform processing to search for the device, and a communication terminal that has been successful in searching for the device operates as a communication terminal being a connection target of the device.

### Advantageous Effects of Invention

According to the present disclosure, a communication system for enabling communication with an IoT device having ultra-low power consumption to be continued can be implemented.

The objects, features, aspects and advantages of the present disclosure will become more apparent from the following detailed description and the accompanying drawings.

### BRIEF DESCRIPTION OF THE DRAWINGS

Fig. 1 is an explanatory diagram illustrating a configuration of radio frames used in an NR communication system;
Fig. 2 is a block diagram illustrating an overall configuration of an NR communication system 210 discussed in 3GPP;
Fig. 3 is a configuration diagram of DC performed by base stations to connect to an NG core;
Fig. 4 is a block diagram illustrating a configuration of a mobile terminal 202 illustrated in Fig. 2;
Fig. 5 is a block diagram illustrating a configuration of a base station 213 illustrated in Fig. 2;
Fig. 6 is a block diagram illustrating a configuration of a 5GC unit;
Fig. 7 is a flowchart illustrating an outline from cell search to idle operation performed by a communication terminal (UE) in an NR communication system;
Fig. 8 is a diagram illustrating an example of a configuration of a cell in an NR system;
Fig. 9 is a connection configuration diagram illustrating an example of a connection configuration of terminals in SL communication;
Fig. 10 is a connection configuration diagram illustrating an example of a connection configuration of base stations supporting an integrated access and backhaul;
Fig. 11 is a diagram illustrating the first half of a sequence illustrating an example of communication failure between a UE and a device and operation for recovery of the communication failure, according to a first embodiment;
Fig. 12 is a diagram illustrating the second half of the sequence illustrating the example of communication failure between a UE and a device and operation for recovery of the communication failure, according to the first embodiment;
Fig. 13 is a diagram illustrating the first half of a sequence illustrating another example of the communication failure between a UE and a device and the operation for recovery of the communication failure, according to the first embodiment;
Fig. 14 is a diagram illustrating the second half of the sequence illustrating another example of the communication failure between a UE and a device and the operation for recovery of the communication failure, according to the first embodiment;
Fig. 15 is a sequence diagram illustrating an example of RLF in a UE connected to a device and operation for recovery of the RLF, according to a second embodiment;
Fig. 16 is a sequence diagram illustrating another example of the RLF in a UE connected to a device and the operation for recovery of the RLF, according to the second embodiment;
Fig. 17 is a diagram illustrating the first half of a sequence illustrating another example of the RLF in a UE connected to a device and the operation for recovery of the RLF, according to the second embodiment;
Fig. 18 is a diagram illustrating the second half of the sequence illustrating another example of the RLF in a UE connected to a device and the operation for recovery of the RLF, according to the second embodiment;
Fig. 19 is a diagram illustrating the first half of a sequence illustrating an example in which communication between a device and the communication network is performed by using a plurality of UEs, according to a third embodiment;
Fig. 20 is a diagram illustrating the second half of the sequence illustrating the example in which communication between a device and the communication network is performed by using a plurality of UEs, according to the third embodiment;
Fig. 21 is a diagram illustrating the first half of a sequence illustrating another example in which communication between a device and the communication network is performed by using a plurality of UEs, according to the third embodiment;
Fig. 22 is a diagram illustrating the second half of the sequence illustrating another example in which communication between a device and the communication network is performed by using a plurality of UEs, according to the third embodiment;
Fig. 23 is a diagram illustrating the first half of a sequence illustrating an example of operation for switching of a device connection target UE related to communication between a UE and a device, according to a fourth embodiment;
Fig. 24 is a diagram illustrating the second half of the sequence illustrating the example of operation for switching of a device connection target UE related to communication between a UE and a device, according to the fourth embodiment;
Fig. 25 is a diagram illustrating the first half of a sequence illustrating another example of the operation for switching of a device connection target UE related to communication between a UE and a device, according to the fourth embodiment;
Fig. 26 is a diagram illustrating the second half of the sequence illustrating another example of the operation for switching of a device connection target UE related to communication between a UE and a device, according to the fourth embodiment;
Fig. 27 is a diagram illustrating the first half of a sequence illustrating an example of operation for switching of a device connection target UE related to communication between a UE and a device, according to a fifth embodiment;
Fig. 28 is a diagram illustrating the second half of the sequence illustrating the example of operation for switching of a device connection target UE related to communication between a UE and a device, according to the fifth embodiment;
Fig. 29 is a diagram illustrating the first half of a sequence illustrating another example of the operation for switching of a device connection target UE related to communication between a UE and a device, according to the fifth embodiment;
Fig. 30 is a diagram illustrating the second half of the sequence illustrating another example of the operation for switching of a device connection target UE related to communication between a UE and a device, according to the fifth embodiment;
Fig. 31 is a sequence diagram illustrating an example of UE handover operation related to communication between a UE and a device, according to a sixth embodiment;
Fig. 32 is a diagram illustrating the first half of a sequence illustrating an example of operation in which a UE to which a device is connected is switched from a UE connected to a 3GPP network to a non-3GPP terminal, according to a seventh embodiment; and
Fig. 33 is a diagram illustrating the second half of the sequence illustrating the example of operation in which a UE to which a device is connected is switched from a UE connected to a 3GPP network to a non-3GPP terminal, according to the seventh embodiment.

### DETAILED DESCRIPTION

### First Embodiment

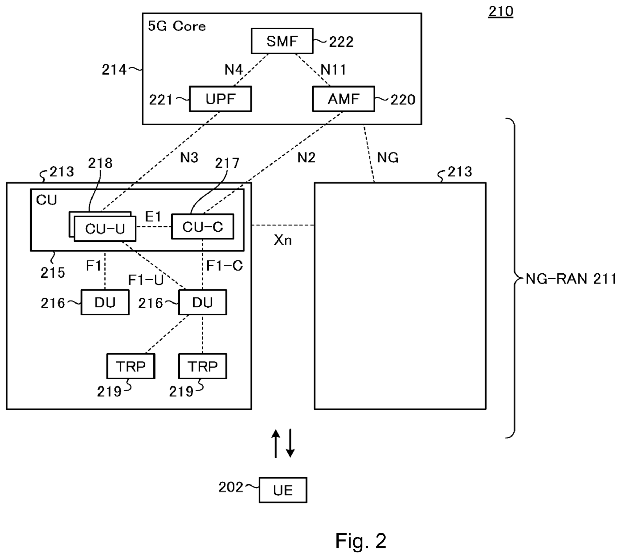

Fig. 2 is a block diagram illustrating an overall configuration of an NR communication system 210 discussed in 3GPP. Fig. 2 will be described. A radio access network is referred to as a next generation radio access network (NG-RAN) 211. A mobile terminal apparatus (hereinafter referred to as a "mobile terminal (user equipment (UE))") 202 being a communication terminal apparatus is capable of radio communication with a base station apparatus (hereinafter referred to as an "NR base station (NG-RAN Node B (gNB))") 213, and transmits and receives signals in radio communication. The NG-RAN 211 includes one or a plurality of NR base stations 213.

Here, the "communication terminal apparatus" includes not only the mobile terminal apparatus such as a mobile cellular phone terminal apparatus, but also includes an immobile device such as a sensor. In the following description, the "communication terminal apparatus" may be simply referred to as a "communication terminal".

A protocol of Access Stratum (AS) is terminated between the UE 202 and the NG-RAN 211. As the protocol of AS, for example, Radio Resource Control (RRC), Service Data Adaptation Protocol (SDAP), Packet Data Convergence Protocol (PDCP), Radio Link Control (RLC), Medium Access Control (MAC), and Physical layer (PHY) are used. The RRC is used in a control plane (which may be hereinafter also referred to as a C plane, a C-Plane, or a CP), the SDAP is used in a user plane (which may be hereinafter also referred to as a U plane, a U-Plane, or a UP), and the PDCP, the MAC, the RLC, and the PHY are used in both of the C plane and the U plane.

The control protocol Radio Resource Control (RRC) between the UE 202 and the NR base station 213 performs broadcast, paging, RRC connection management, and the like. States between the NR base station 213 and the UE 202 in RRC include RRC_IDLE, RRC_CONNECTED, and RRC_INACTIVE.

In RRC_IDLE, public land mobile network (PLMN) selection, system information (SI) broadcast, paging, cell re-selection, mobility, and the like are performed. In RRC_CONNECTED, the mobile terminal has RRC connection, and can transmit and receive data to and from a network. In RRC_CONNECTED, handover (HO), neighbor cell measurement, and the like are performed. In RRC_INACTIVE, connection between a 5G core unit 214 and the NR base station 213 is maintained, and system information (SI) broadcast, paging, cell re-selection, mobility, and the like are performed.

The gNB 213 is connected to the 5G core unit (which may be hereinafter referred to as a "5GC unit") 214 including an Access and Mobility Management Function (AMF), a Session Management Function (SMF), a User Plane Function (UPF), and the like via an NG interface. Control information and/or user data is communicated between the gNB 213 and the 5GC unit 214. The NG interface is a general term for an N2 interface between the gNB 213 and an AMF 220, an N3 interface between the gNB 213 and a UPF 221, an N11 interface between the AMF 220 and an SMF 222, and an N4 interface between the UPF 221 and the SMF 222. A plurality of 5GC units 214 may be connected to one gNB 213. The gNBs 213 are connected via an Xn interface, and control information and/or user data is communicated between the gNBs 213.

The 5GC unit 214 is an upper apparatus, or specifically an upper node, and performs control of connection between the NR base station 213 and the mobile terminal (UE) 202, distribution of paging signals to one or a plurality of NR base stations (gNBs) 213 and/or LTE base stations (E-UTRAN Node Bs (eNBs)), and the like. The 5GC unit 214 performs mobility control of an idle state. In a case in which the mobile terminal 202 is in an idle state, an inactive state, and an active state, the 5GC unit 214 manages a tracking area list. The 5GC unit 214 transmits a paging message to a cell belonging to a tracking area in which the mobile terminal 202 is registered, and thereby starts a paging protocol.

The gNB 213 may configure one or a plurality of cells. In a case in which one gNB 213 configures a plurality of cells, each cell is configured to be capable of communicating with the UE 202.

The gNB 213 may be divided into a central unit (which may be hereinafter referred to as a CU) 215 and a distributed unit (which may be hereinafter referred to as a DU) 216. One CU 215 is configured in the gNB 213. One or a plurality of DUs 216 are configured in the gNB 213. One DU 216 configures one or a plurality of cells. The CU 215 is connected to the DU 216 via an F1 interface, and control information and/or user data is communicated between the CU 215 and the DU 216. The F1 interface includes an F1-C interface and an F1-U interface. The CU 215 has a function of each protocol of the RRC, the SDAP, and the PDCP, and the DU 216 has a function of each protocol of the RLC, the MAC, and the PHY. One or a plurality of transmission reception points (TRPs) 219 may be connected to the DU 216. The TRP 219 transmits and receives radio signals to and from the UE.

The CU 215 may be divided into a C-plane CU (CU-C) 217 and a U-plane CU (CU-U) 218. One CU-C 217 is configured in the CU 215. One or a plurality of CU-Us 218 are configured in the CU 215. The CU-C 217 is connected to the CU-U 218 via an E1 interface, and control information is communicated between the CU-C 217 and the CU-U 218. The CU-C 217 is connected to the DU 216 via an F1-C interface, and control information is communicated between the CU-C 217 and the DU 216. The CU-U 218 is connected to the DU 216 via an F1-U interface, and user data is communicated between the CU-U 218 and the DU 216.

In the 5G communication system, a Unified Data Management (UDM) function and a Policy Control Function (PCF) described in NPL 10 (3GPP TS 23.501) may be included. The UDM and/or the PCF may be included in the 5GC unit 214 of Fig. 2.

In the 5G communication system, a Location Management Function (LMF) described in NPL 24 (3GPP TS 38.305) may be provided. As disclosed in NPL 25 (3GPP TS 23.273), the LMF may be connected to the base station via the AMF.

In the 5G communication system, a Non-3GPP Interworking Function (N3IWF) described in NPL 10 (3GPP TS 23.501) may be included. The N3IWF may terminate an access network (AN) between the N3IWF and the UE in non-3GPP access with the UE.

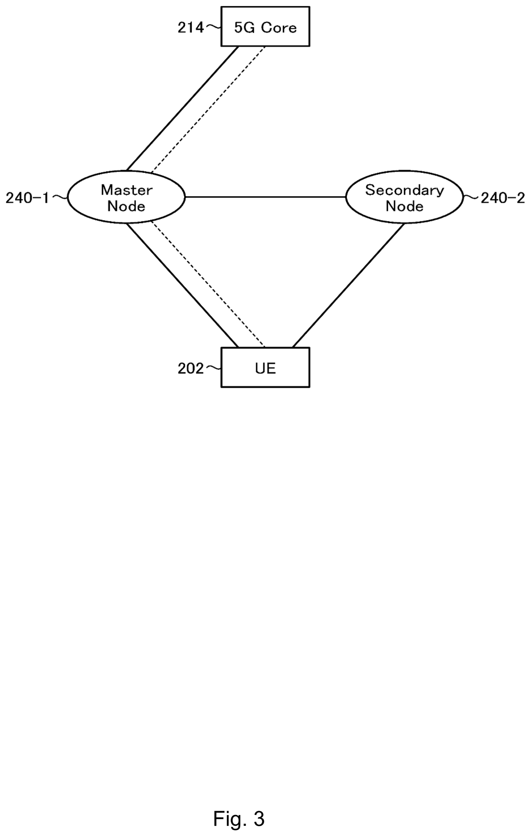

Fig. 3 is a diagram illustrating a configuration of dual connectivity (DC) to connect to an NG core. In Fig. 3, the solid line indicates connection of the U-Plane, and the broken line indicates connection of the C-Plane. In Fig. 3, a master base station 240-1 may be a gNB or an eNB. A secondary base station 240-2 may be a gNB or an eNB. For example, in Fig. 3, a DC configuration in which the master base station 240-1 is a gNB and the secondary base station 240-2 is an eNB may be referred to as NG-EN-DC. Although Fig. 3 illustrates an example in which U-Plane connection between the 5GC unit 214 and the secondary base station 240-2 is performed via the master base station 240-1, the U-Plane connection may be directly performed between the 5GC unit 214 and the secondary base station 240-2. In Fig. 3, in place of the 5GC unit 214, an Evolved Packet Core (EPC), which is a core network connected to the LTE system or the LTE-A system, may be connected to the master base station 240-1. U-Plane connection between the EPC and the secondary base station 240-2 may be directly performed.

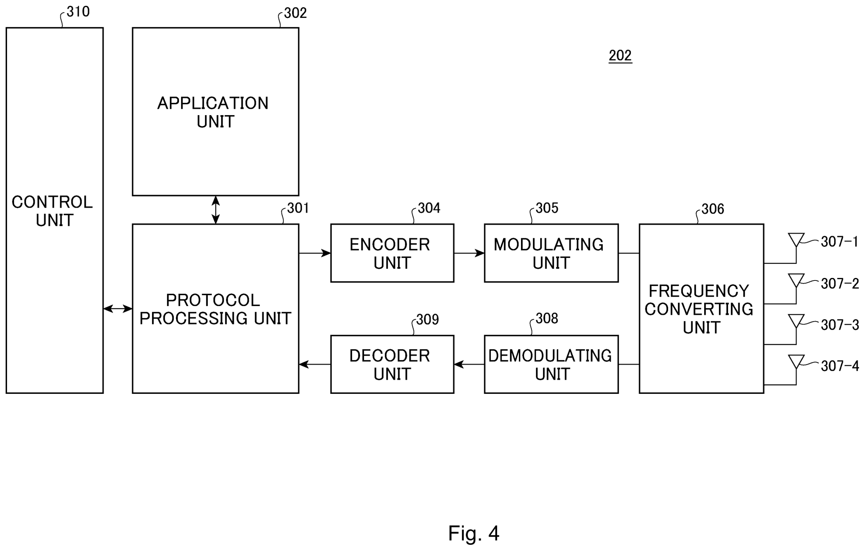

Fig. 4 is a block diagram illustrating a configuration of the mobile terminal 202 illustrated in Fig. 2. Transmission processing of the mobile terminal 202 illustrated in Fig. 4 will be described. First, control data from a control unit 310 and user data from an application unit 302 are transmitted to a protocol processing unit 301. The control data and the user data may be buffered. The buffers of the control data and the user data may be provided in the control unit 310, may be provided in the application unit 302, or may be provided in the protocol processing unit 301. The protocol processing unit 301 performs protocol processing of the SDAP, the PDCP, the RLC, the MAC, and the like, for example, operation such as determination of a transmission destination base station in DC or the like and provision of a header in each protocol. The data subjected to the protocol processing is delivered to an encoder unit 304, and is subjected to encoding processing such as error correction. There may be data that is directly output from the protocol processing unit 301 to a modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to a frequency converting unit 306 to be converted into a radio transmission frequency. Subsequently, transmission signals are transmitted from antennas 307-1 to 307-4 to the base station 213. Although Fig. 4 illustrates an example of a case in which the number of antennas is four, the number of antennas is not limited to four.

Reception processing of the mobile terminal 202 is performed as follows. A radio signal from the base station 213 is received by the antennas 307-1 to 307-4. The received signal is converted from a radio reception frequency into a baseband signal in the frequency converting unit 306, and is subjected to demodulation processing in a demodulating unit 308. In the demodulating unit 308, weight calculation and multiplication processing may be performed. The demodulated data is delivered to a decoder unit 309, and is subjected to decoding processing such as error correction. The decoded data is delivered to the protocol processing unit 301, and is subjected to protocol processing of the MAC, the RLC, the PDCP, the SDAP, and the like, for example, operation such as removal of a header in each protocol. Of the data subjected to the protocol processing, the control data is delivered to the control unit 310 and the user data is delivered to the application unit 302.

The series of processing of the mobile terminal 202 is controlled by the control unit 310. Thus, the control unit 310 is also connected to each of the units 302 and 304 to 309, of which illustration is omitted in Fig. 4.

Each unit of the mobile terminal 202, such as the control unit 310, the protocol processing unit 301, the encoder unit 304, and the decoder unit 309, is implemented by processing circuitry including a processor and a memory, for example. For example, the control unit 310 is implemented by the processor executing a program describing the series of processing of the mobile terminal 202. The program describing the series of processing of the mobile terminal 202 is stored in the memory. Examples of the memory include non-volatile or volatile semiconductor memories, such as a random access memory (RAM), a read only memory (ROM), and a flash memory. Each unit of the mobile terminal 202, such as the control unit 310, the protocol processing unit 301, the encoder unit 304, and the decoder unit 309, may be implemented by dedicated processing circuitry such as a field programmable gate array (FPGA), an application specific integrated circuit (ASIC), and a digital signal processor (DSP). In Fig. 4, the number of antennas used by the mobile terminal 202 for transmission and the number of antennas used thereby for reception may be the same or different.

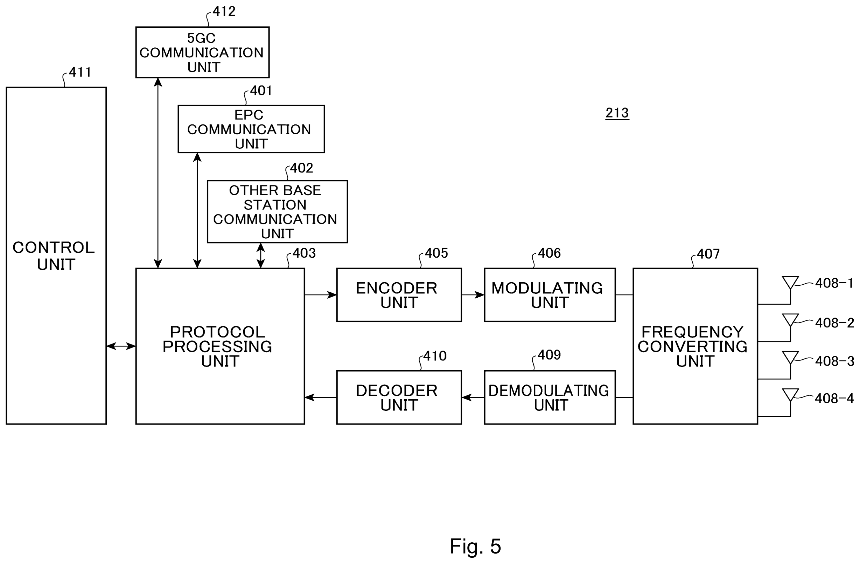

Fig. 5 is a block diagram illustrating a configuration of the base station 213 illustrated in Fig. 2. Transmission processing of the base station 213 illustrated in Fig. 5 will be described. An EPC communication unit 401 transmits and receives data between the base station 213 and the EPC. A 5GC communication unit 412 transmits and receives data between the base station 213 and the 5GC (such as the 5GC unit 214). Another base station communication unit 402 transmits and receives data to and from another base station. Each of the EPC communication unit 401, the 5GC communication unit 412, and such another base station communication unit 402 exchanges information with a protocol processing unit 403. Control data from a control unit 411 and user data and control data from the EPC communication unit 401, the 5GC communication unit 412, and such another base station communication unit 402 are transmitted to the protocol processing unit 403. The control data and the user data may be buffered. The buffers of the control data and the user data may be provided in the control unit 411, may be provided in the EPC communication unit 401, may be provided in the 5GC communication unit 412, or may be provided in such another base station communication unit 402.

The protocol processing unit 403 performs protocol processing of the SDAP, the PDCP, the RLC, the MAC, and the like, for example, operation such as routing of transmission data in DC or the like and provision of a header in each protocol. The data subjected to the protocol processing is delivered to an encoder unit 405, and is subjected to encoding processing such as error correction. There may be data that is directly output from the protocol processing unit 403 to a modulating unit 406 without being subjected to the encoding processing. The data may be transmitted from the protocol processing unit 403 to such another base station communication unit 402. For example, in DC, the data transmitted from the 5GC communication unit 412 or the EPC communication unit 401 may be transmitted to another base station, such as the secondary base station, via such another base station communication unit 402. The encoded data is subjected to modulation processing in the modulating unit 406. In the modulating unit 406, MIMO precoding may be performed. The modulated data is converted into a baseband signal, and is then output to the frequency converting unit 407 to be converted into a radio transmission frequency. Subsequently, transmission signals are transmitted from antennas 408-1 to 408-4 to one or a plurality of mobile terminals 202. Although Fig. 5 illustrates an example of a case in which the number of antennas is four, the number of antennas is not limited to four.

Reception processing of the base station 213 is performed as follows. A radio signal from one or a plurality of mobile terminals 202 is received by the antennas 408-1 to 408-4. The received signal is converted from a radio reception frequency into a baseband signal in the frequency converting unit 407, and is subjected to demodulation processing in a demodulating unit 409. The demodulated data is delivered to a decoder unit 410, and is subjected to decoding processing such as error correction. The decoded data is delivered to the protocol processing unit 403, and is subjected to protocol processing of the MAC, the RLC, the PDCP, the SDAP, and the like, for example, operation such as removal of a header in each protocol. Of the data subjected to the protocol processing, the control data is delivered to the control unit 411, the 5GC communication unit 412, the EPC communication unit 401, or such another base station communication unit 402, and the user data is delivered to the 5GC communication unit 412, the EPC communication unit 401, or such another base station communication unit 402. The data transmitted from such another base station communication unit 402 may be transmitted to the 5GC communication unit 412 or the EPC communication unit 401. The data may be uplink data transmitted to the 5GC communication unit 412 or the EPC communication unit 401 unit via another base station in DC, for example.

The series of processing of the base station 213 is controlled by the control unit 411. Thus, the control unit 411 is also connected to each of the units 401, 402, 405 to 410, and 412, of which illustration is omitted in Fig. 5.

Each unit of the base station 213, such as the control unit 411, the protocol processing unit 403, the 5GC communication unit 412, the EPC communication unit 401, such another base station communication unit 402, the encoder unit 405, and the decoder unit 410, is implemented by processing circuitry including a processor and a memory or dedicated processing circuitry such as an FPGA, an ASIC, and a DSP, as in the case of the mobile terminal 202 described above. In Fig. 5, the number of antennas used by the base station 213 for transmission and the number of antennas used thereby for reception may be the same or different.

As an example of a configuration of the CU 215 illustrated in Fig. 2, a configuration provided with a DU communication unit may be used, except the encoder unit 405, the modulating unit 406, the frequency converting unit 407, the antennas 408-1 to 408-4, the demodulating unit 409, and the decoder unit 410 illustrated in Fig. 5. The DU communication unit is connected to the protocol processing unit 403. The protocol processing unit 403 in the CU 215 performs protocol processing of the PDCP, the SDAP, and the like.

As an example of a configuration of the DU 216 illustrated in Fig. 2, a configuration provided with a CU communication unit may be used, except the EPC communication unit 401, such another base station communication unit 402, and the 5GC communication unit 412 illustrated in Fig. 5. The CU communication unit is connected to the protocol processing unit 403. The protocol processing unit 403 in the DU 216 performs protocol processing of the PHY, the MAC, the RLC, and the like.

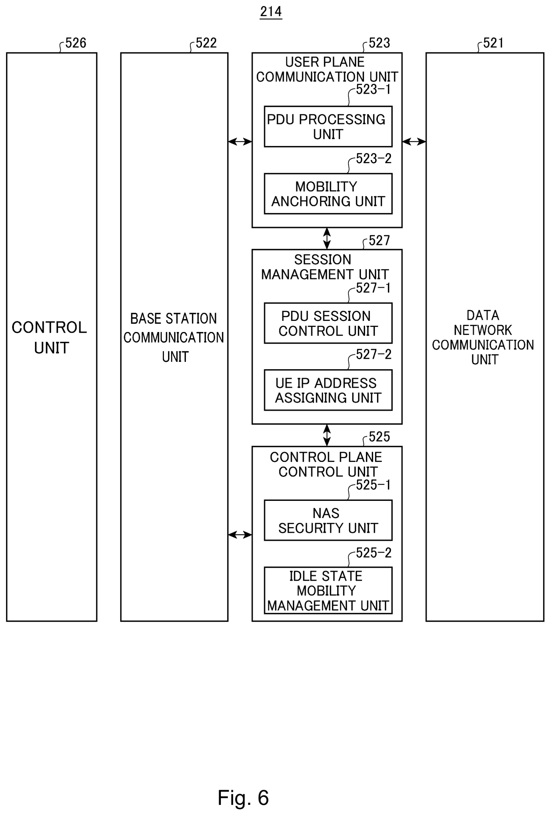

Fig. 6 is a block diagram illustrating a configuration of the 5GC unit. Fig. 6 illustrates a configuration of the 5GC unit 214 illustrated in Fig. 2 described above. Fig. 6 illustrates a case in which a configuration of the AMF, a configuration of the SMF, and a configuration of the UPF are included in the 5GC unit 214 illustrated in Fig. 2. In the example illustrated in Fig. 6, the AMF may have a function of a control plane control unit 525, the SMF may have a function of a session management unit 527, and the UPF may have a function of a user plane communication unit 523 and a data network communication unit 521. The data network communication unit 521 transmits and receives data between the 5GC unit 214 and a data network. The base station communication unit 522 transmits and receives data between the 5GC unit 214 and the base station 213 via an NG interface. User data transmitted from the data network is delivered from the data network communication unit 521 to the base station communication unit 522 via the user plane communication unit 523, and is transmitted to one or a plurality of base stations 213. User data transmitted from the base station 213 is delivered from the base station communication unit 522 to the data network communication unit 521 via the user plane communication unit 523, and is transmitted to the data network.

Control data transmitted from the base station 213 is delivered from the base station communication unit 522 to the control plane control unit 525. The control plane control unit 525 may deliver the control data to the session management unit 527. The control data may be transmitted from the data network. The control data transmitted from the data network may be transmitted from the data network communication unit 521 to the session management unit 527 via the user plane communication unit 523. The session management unit 527 may transmit the control data to the control plane control unit 525.

The user plane communication unit 523 includes a PDU processing unit 523-1, a mobility anchoring unit 523-2, and the like, and performs general processing on the user plane (which may be hereinafter also referred to as a U-Plane). The PDU processing unit 523-1 performs processing of data packets, for example, transmission and reception of packets to and from the data network communication unit 521 and transmission and reception of packets to and from the base station communication unit 522. The mobility anchoring unit 523-2 anchors a data path at the time of mobility of the UE.

The session management unit 527 performs management of a PDU session provided between the UE and the UPF and the like. The session management unit 527 includes a PDU session control unit 527-1, a UE IP address assigning unit 527-2, and the like. The PDU session control unit 527-1 performs management of a PDU session between the mobile terminal 202 and the 5GC unit 214. The UE IP address assigning unit 527-2 performs assignment of an IP address to the mobile terminal 202 and the like.

The control plane control unit 525 includes a NAS security unit 525-1, an idle state mobility management unit 525-2, and the like, and performs general processing on the control plane (which may be hereinafter also referred to as a C-Plane). The NAS security unit 525-1 performs security of a Non-Access Stratum (NAS) message and the like. The idle state mobility management unit 525-2 performs mobility management of the idle state (which may also be simply referred to as an "RRC_IDLE state" or "idle"), generation and control of a paging signal in the idle state, addition, deletion, update, search, and tracking area list management of a tracking area of one or a plurality of served mobile terminals 202, and the like.

The series of processing of the 5GC unit 214 is controlled by a control unit 526. Thus, the control unit 526 is connected to each of the units 521 to 523, 525, and 527, of which illustration is omitted in Fig. 6. Each unit of the 5GC unit 214 is implemented by processing circuitry including a processor and a memory or dedicated processing circuitry such as an FPGA, an ASIC, and a DSP, for example, as in the case of the control unit 310 of the mobile terminal 202 described above.

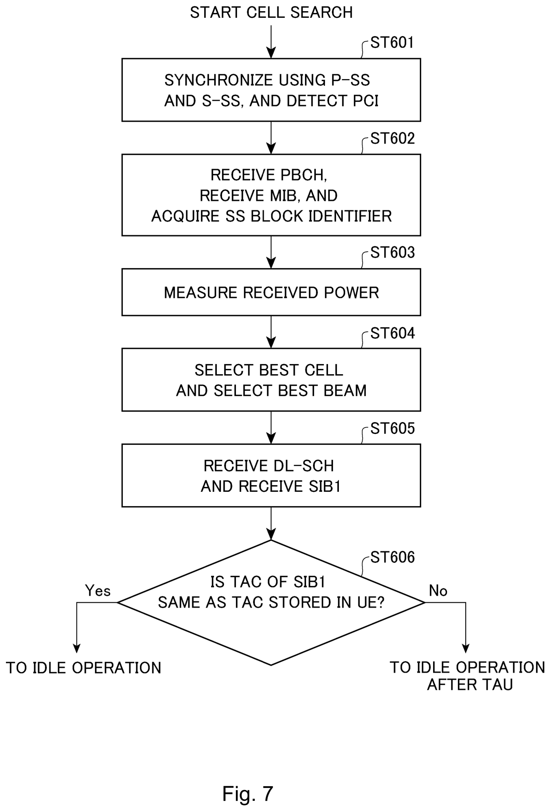

Next, an example of a cell search method in the communication system will be described. Fig. 7 is a flowchart illustrating an outline from cell search to idle operation performed by the communication terminal (UE) in the NR communication system. After the communication terminal starts cell search, in Step ST601, the communication terminal establishes synchronization of a slot timing and a frame timing, using a primary synchronization signal (P-SS) and a secondary synchronization signal (S-SS) transmitted from a neighbor base station.

The P-SS and the S-SS are collectively referred to as a synchronization signal (SS). The synchronization signal (SS) is assigned a synchronization code that corresponds to a physical cell identifier (PCI) assigned to each cell on a one-to-one basis. It is studied that the number of PCIs is 1008. The communication terminal establishes synchronization using the 1008 PCIs, and detects (identifies) the PCI(s) of synchronized cell(s).

Next, in Step ST602, the communication terminal receives a PBCH of the synchronized cell. A master information block (MIB) including cell configuration information is mapped to a BCCH on the PBCH. Thus, by receiving the PBCH and obtaining the BCCH, the MIB can be obtained. Examples of information of the MIB include a system frame number (SFN), scheduling information of a system information block (SIB) 1, subcarrier spacing for the SIB1 or the like, information of a DM-RS position, and the like.

The communication terminal acquires an SS block identifier on the PBCH. A part of a bit string of the SS block identifier is included in the MIB. The rest of the bit string is included in an identifier used to generate a DM-RS sequence accompanying the PBCH. The communication terminal acquires the SS block identifier, using the MIB included in the PBCH and the DM-RS sequence accompanying the PBCH.

Next, in Step ST603, the communication terminal measures received power of an SS block.

Next, in Step ST604, the communication terminal selects a cell having the best received quality, for example, a cell having the highest received power, that is, the best cell, out of the one or more cells detected up to Step ST603. The communication terminal selects a beam having the best received quality, for example, a beam having the highest received power of the SS block, that is, the best beam. In selection of the best beam, for example, received power of the SS block of each SS block identifier is used.

Next, in Step ST605, the communication terminal receives a DL-SCH based on the scheduling information of the SIB1 included in the MIB, and obtains the SIB1 in the broadcast information BCCH. The SIB1 includes information on access to the cell, cell configuration information, and scheduling information of another SIB (SIBk: k is an integer satisfying k ≥ 2). The SIB1 includes a tracking area code (TAC).

Next, in Step ST606, the communication terminal compares the TAC of the SIB 1 received in Step ST605 and a TAC part of a tracking area identity (TAI) in a tracking area list already stored in the communication terminal. The tracking area list is also referred to as a TAI list. The TAI is identification information for identifying the tracking area, and includes a mobile country code (MCC), a mobile network code (MNC), and a tracking area code (TAC). The MCC is a country code. The MNC is a network code. The TAC is a code number of a tracking area.

As a result of the comparison in Step ST606, if the TAC received in Step ST605 is the same as the TAC included in the tracking area list, the communication terminal starts idle operation in the cell. As a result of the comparison, if the TAC received in Step ST605 is not included in the tracking area list, the communication terminal requests, via the cell, the core network (EPC) including an MME and the like to change the tracking area in order to perform tracking area update (TAU).

An apparatus configuring the core network (which may be hereinafter referred to as a "core network-side apparatus") updates the tracking area list, based on an identification number (a UE-ID or the like) of the communication terminal transmitted from the communication terminal together with a TAU request signal. The core network-side apparatus transmits the updated tracking area list to the communication terminal. The communication terminal rewrites (updates) a TAC list stored in the communication terminal, based on the received tracking area list. Subsequently, the communication terminal starts idle operation in the cell.

Next, an example of a random access method in the communication system will be described. In random access, 4-step random access and 2-step random access are used. In each of the 4-step random access and the 2-step random access, there are contention-based random access, that is, random access which may cause contention of timings with other mobile terminals, and contention-free random access.

An example of a contention-based 4-step random access method will be described. As a first step, the mobile terminal transmits a random access preamble to the base station. The random access preamble may be selected by the mobile terminal from a predetermined range, or may be individually assigned to the mobile terminal and notified from the base station.

As a second step, the base station transmits a random access response to the mobile terminal. The random access response includes uplink scheduling information to be used in a third step, a terminal identifier to be used in uplink transmission in the third step, and the like.

As the third step, the mobile terminal performs uplink transmission to the base station. The mobile terminal uses the information acquired in the second step in the uplink transmission. As a fourth step, the base station notifies the mobile terminal as to whether contention resolution is achieved. The mobile terminal notified of "without contention" ends random access processing. The mobile terminal notified of "with contention" resumes processing from the first step.

A contention-free 4-step random access method is different from the contention-based 4-step random access method in the following. In other words, prior to the first step, the base station assigns a random access preamble and uplink scheduling to the mobile terminal in advance. A notification as to whether contention resolution is achieved in the fourth step is unnecessary.

An example of a contention-based 2-step random access method will be described. As a first step, the mobile terminal performs transmission of a random access preamble and uplink transmission to the base station. As a second step, the base station notifies the mobile terminal as to whether there is contention. The mobile terminal notified of "without contention" ends random access processing. The mobile terminal notified of "with contention" resumes processing from the first step.

A contention-free 2-step random access method is different from the contention-based 2-step random access method in the following. In other words, prior to the first step, the base station assigns a random access preamble and uplink scheduling to the mobile terminal in advance. As a second step, the base station transmits a random access response to the mobile terminal.

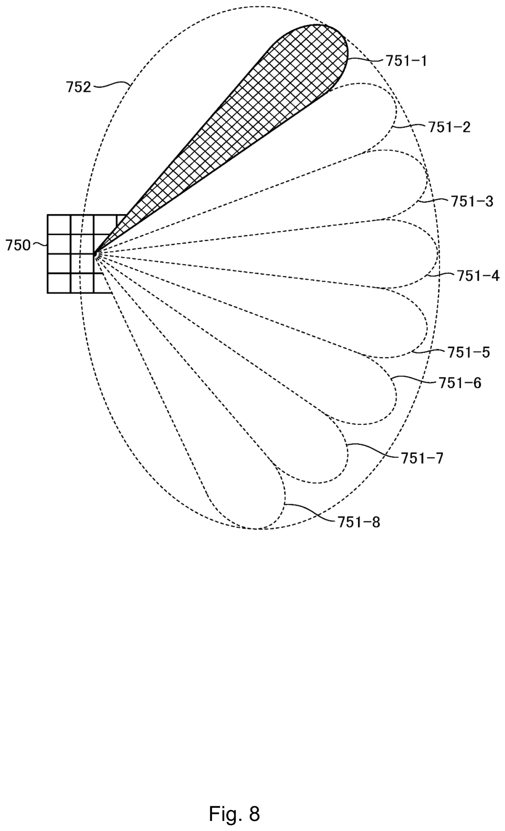

Fig. 8 illustrates an example of a configuration of a cell in NR. In a cell in NR, a narrow beam is formed and is transmitted with its direction being changed. In the example illustrated in Fig. 8, a base station 750 performs transmission and reception to and from the mobile terminal, using a beam 751-1 at a certain time. At another time, the base station 750 performs transmission and reception to and from the mobile terminal, using a beam 751-2. Subsequently, similarly, the base station 750 performs transmission and reception to and from the mobile terminal, using one or a plurality of beams 751-3 to 751-8. In this manner, the base station 750 configures a cell 752 having a wide range.

Although Fig. 8 illustrates an example in which the number of beams used by the base station 750 is eight, the number of beams may be different from eight. In the example illustrated in Fig. 8, although the number of beams simultaneously used by the base station 750 is one, the number of beams may be more than one.

A concept of quasi-colocation (QCL) is used in identification of a beam (see NPL 14 (3GPP TS 38.214)). In other words, identification is performed using information indicating as which beam of a reference signal (for example, an SS block, a CSI-RS) the beam can be considered to be the same. The information may include types of information regarding aspects in which the beam can be considered to be the same beam, for example, information on a Doppler shift, a Doppler shift spread, an average delay, an average delay spread, and a spatial Rx parameter (see NPL 14 (3GPP TS 38.214)).

In 3GPP, a sidelink (SL) is supported for device-to-device (D2D) communication and vehicle-to-vehicle (V2V) communication (see NPL 1 and NPL 16). The SL is defined by a PC5 interface.

In SL communication, support of PC5-S signaling is studied in order to support unicast and groupcast in addition to broadcast (see NPL 27 (3GPP TS 23.287)). For example, the PC5-S signaling is performed to establish the SL, that is, a link for performing PC5 communication. The link is performed in a V2X layer, and is also referred to as a layer 2 link.

In the SL communication, support of RRC signaling is studied (see NPL 27 (3GPP TS 23.287)). The RRC signaling in the SL communication is also referred to as PC5 RRC signaling. For example, notification of a UE capability and notification of an AS layer configuration and the like for performing V2X communication using the PC5 communication between the UEs performing the PC5 communication are proposed.

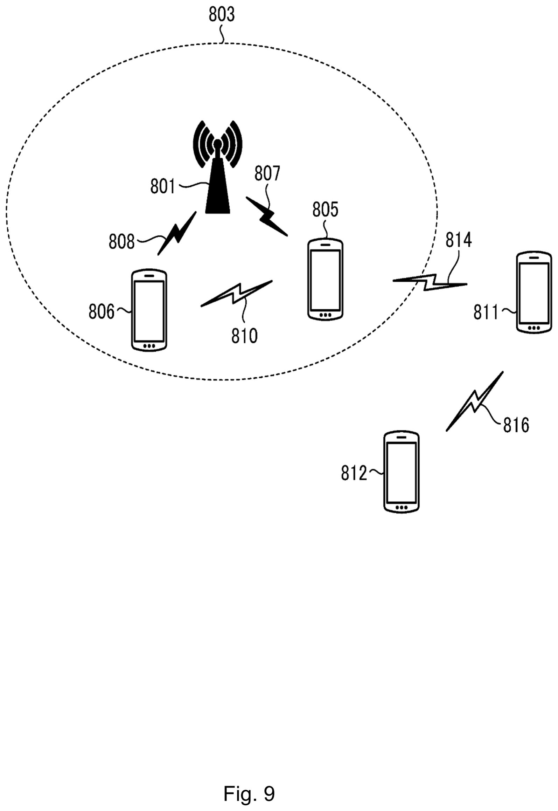

An example of a connection configuration of the mobile terminals in the SL communication is illustrated in Fig. 9. In the example illustrated in Fig. 9, a UE 805 and a UE 806 are present inside coverage 803 of a base station 801. UL/DL communication 807 is performed between the base station 801 and the UE 805. UL/DL communication 808 is performed between the base station 801 and the UE 806. SL communication 810 is performed between the UE 805 and the UE 806. A UE 811 and a UE 812 are present outside the coverage 803. SL communication 814 is performed between the UE 805 and the UE 811. SL communication 816 is performed between the UE 811 and the UE 812.

As an example of communication between the UE and the NW via relay in the SL communication, the UE 805 illustrated in Fig. 9 relays communication between the UE 811 and the base station 801.

A configuration similar to that of Fig. 4 may be used for the UE performing the relay. Relay processing in the UE will be described with reference to Fig. 4. Relay processing performed by the UE 805 in communication from the UE 811 to the base station 801 will be described. A radio signal from the UE 811 is received by the antennas 307-1 to 307-4. The received signal is converted from a radio reception frequency into a baseband signal in the frequency converting unit 306, and is subjected to demodulation processing in the demodulating unit 308. In the demodulating unit 308, weight calculation and multiplication processing may be performed. The demodulated data is delivered to a decoder unit 309, and is subjected to decoding processing such as error correction. The decoded data is delivered to the protocol processing unit 301, and is subjected to protocol processing of the MAC, the RLC, and the like used for communication with the UE 811, for example, operation such as removal of a header in each protocol. Protocol processing of the RLC, the MAC, and the like used for communication with the base station 801, for example, operation such as provision of a header in each protocol, is performed. In the protocol processing unit 301 of the UE 811, protocol processing of the PDCP and the SDAP may be performed. The data subjected to the protocol processing is delivered to the encoder unit 304, and is subjected to encoding processing such as error correction. There may be data that is directly output from the protocol processing unit 301 to the modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to the frequency converting unit 306 to be converted into a radio transmission frequency. Subsequently, transmission signals are transmitted from the antennas 307-1 to 307-4 to the base station 801.

Although the above description illustrates an example of the relay performed by the UE 805 in communication from the UE 811 to the base station 801, similar processing is also used in relay in communication from the base station 801 to the UE 811.

A 5G base station can support an integrated access and backhaul (IAB) (see NPLs 2 and 20). A base station supporting the IAB (which may be hereinafter referred to as an IAB base station) includes an IAB donor CU being a CU of the base station that operates as an IAB donor providing an IAB function, an IAB donor DU being a DU of the base station that operates as an IAB donor, and an IAB node connected to the IAB donor DU and the UE using a radio interface. An F1 interface is provided between the IAB node and the IAB donor CU (see NPL 2).

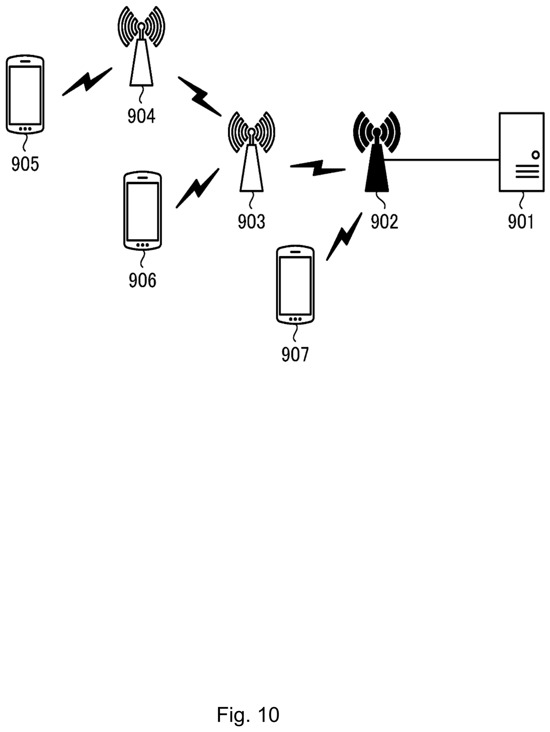

An example of connection of the IAB base stations is illustrated in Fig. 10. An IAB donor CU 901 is connected to an IAB donor DU 902. An IAB node 903 is connected to the IAB donor DU 902, using a radio interface. The IAB node 903 is connected to an IAB node 904, using a radio interface. In other words, multi-stage connection of the IAB nodes may be performed. A UE 905 is connected to the IAB node 904, using a radio interface. A UE 906 may be connected to the IAB node 903 using a radio interface, or a UE 907 may be connected to the IAB donor DU 902 using a radio interface. A plurality of IAB donor DUs 902 may be connected to the IAB donor CU 901, a plurality of IAB nodes 903 may be connected to the IAB donor DU 902, or a plurality of IAB nodes 904 may be connected to the IAB node 903.

A Backhaul Adaptation Protocol (BAP) layer is provided in connection between the IAB donor DU and the IAB node and connection between the IAB nodes (see NPL 29). The BAP layer performs operation such as routing of received data to the IAB donor DU and/or the IAB node and mapping of the received data to an RLC channel (see NPL 29).

As an example of a configuration of the IAB donor CU, a configuration similar to that of the CU 215 is used.

As an example of a configuration of the IAB donor DU, a configuration similar to that of the DU 216 is used. In the protocol processing unit of the IAB donor DU, processing of the BAP layer, for example, processing such as provision of a BAP header in downlink data, routing to the IAB node, and removal of the BAP header in uplink data, is performed.

As an example of a configuration of the IAB node, a configuration except the EPC communication unit 401, such another base station communication unit 402, and the 5GC communication unit 412 illustrated in Fig. 5 may be used.

Transmission and reception processing in the IAB node will be described with reference to Fig. 5 and Fig. 10. Transmission and reception processing of the IAB node 903 in communication between the IAB donor CU 901 and the UE 905 will be described. In uplink communication from the UE 905 to the IAB donor CU 901, a radio signal from the IAB node 904 is received by the antenna(s) 408 (a part or all of the antennas 408-1 to 408-4). The received signal is converted from a radio reception frequency into a baseband signal in the frequency converting unit 407, and is subjected to demodulation processing in the demodulating unit 409. The demodulated data is delivered to the decoder unit 410, and is subjected to decoding processing such as error correction. The decoded data is delivered to the protocol processing unit 403, and is subjected to protocol processing of the MAC, the RLC, and the like used for communication with the IAB node 904, for example, operation such as removal of a header in each protocol. Routing to the IAB donor DU 902 using a BAP header is performed, and protocol processing of the RLC, the MAC, and the like used for communication with the IAB donor DU 902, for example, operation such as provision of a header in each protocol, is performed. The data subjected to the protocol processing is delivered to the encoder unit 405, and is subjected to encoding processing such as error correction. There may be data that is directly output from the protocol processing unit 403 to the modulating unit 406 without being subjected to the encoding processing. The encoded data is subjected to modulation processing in the modulating unit 406. In the modulating unit 406, MIMO precoding may be performed. The modulated data is converted into a baseband signal, and is then output to the frequency converting unit 407 to be converted into a radio transmission frequency. Subsequently, transmission signals are transmitted to the IAB donor DU 902 from the antennas 408-1 to 408-4. Similar processing is also performed in downlink communication from the IAB donor CU 901 to the UE 905.

Transmission and reception processing similar to that of the IAB node 903 is also performed in the IAB node 904. In the protocol processing unit 403 of the IAB node 903, as processing of the BAP layer, for example, processing such as provision of a BAP header in uplink communication, routing to the IAB node 904, and removal of the BAP header in downlink communication is performed.

In 3GPP, introducing IoT devices (which may be hereinafter referred to as devices) having ultra-low power consumption into the mobile communication system has been discussed. It is proposed that an IoT device having ultra-low power consumption performs communication with a UE or a gNB by using a communication method different from a communication method used in air interfaces defined in conventional 3GPP (NPLs 31, 33, and 34). Thus, a method for making communication on an air interface (Uu) between a UE and a gNB and communication on an air interface between a device and a UE or a gNB coexist is required. As interfaces defined in 3GPP, not only the air interface (Uu) between a UE and a gNB but also an air interface (PC5) between a UE and a UE is defined. Thus, a method for making communication on the air interface (PC5) between a UE and a UE and communication on the air interface between a device and a UE or a gNB coexist is also required.

A situation is considered in which movement of the device changes a radio wave environment between the device and the UE, thereby making communication between the device and the UE unavailable. However, a method of recovering from such a situation is not disclosed. Thus, this poses a problem that, after communication between the device and the UE is made unavailable, communication between the device and the communication network cannot be continued.

The present embodiment will disclose a method for solving such a problem.

In the present embodiment for solving the problem, a UE detects communication failure between the UE and a device (sometimes referred to hereinafter as device communication failure).

The UE may detect the device communication failure in response to failing to receive a signal from the device continuously certain times or in response to failing to receive a signal from the device continuously for a certain period. The signal from the device may be, for example, a search indication response from the device, data transmission from the device, or a signal related to monitoring of an active/inactive state from the device.

The certain times may be statically defined in technical specifications in advance, or may be determined by a base station or core NW apparatus and notified to the UE. The information may be included in a configuration for communication between the UE and the device. Notification of the information may use RRC signaling, MAC signaling, L1/L2 signaling, or signaling between the core NW apparatus and the UE, for example, NAS signaling. The same may apply to the certain period.

The core NW apparatus may be an AMF, a UPF, or an SMF. The core NW apparatus may be an entity that acts as a host in communication with the device. A new entity related to communication with the device may be provided. The core NW apparatus may be the new entity. With respect to the core NW apparatus, the same may apply to the following description.

The UE may perform a device search. The UE may transmit a search signal to a device. The device search by the UE may be performed in response to indication from the base station, or may be may be performed in response to indication from the core NW apparatus. The base station and/or the core NW apparatus may indicate, to the UE, a device search.

The UE may perform a device search in response to failing to receive a signal from a device continuously certain times. As another example, the UE may perform a device search in response to failing to receive a signal from a device for a certain period. The UE may notify the base station and/or the core NW apparatus of a result of the device search. The notification may include information related to the device, for example, information related to the presence or absence of the device, or may include information related to received power from the device. This enables, for example, the UE to promptly perform a device search.

The certain times related to the device search may be statically defined in technical specifications in advance, or may be determined by the base station or the core NW apparatus and notified to the UE. The information may be included in a configuration for communication between the UE and the device. Notification of the information may use RRC signaling, MAC signaling, L1/L2 signaling, or signaling between the core NW apparatus and the UE, for example, NAS signaling. The same may apply to the certain period related to the device search.

The certain times related to the device search may be the same as or different from the certain times related to the detection of the device communication failure. The same may apply to the certain period related to the device search.

A device may transmit a signal to the UE. The transmission of the signal from the device to the UE may be performed, for example, as response to a device search from the UE. As another example, the device may perform transmission of the signal independently.

The UE may notify the base station and/or the core NW apparatus of information related to a result of a device search. The notification may include information related to the presence or absence of a device to be searched, may include identification information related to a searched device, or may include information related to received power from a searched device.

The UE may perform a device search at a certain periodicity. The periodicity may be defined in technical specifications in advance, may be indicated to the UE by the base station, or may be indicated to the UE by the core NW apparatus.

The UE may transmit a signal to a device in response to a signal not being transmitted to the device for a certain period. The signal may be, for example, a signal for a device search or a signal for monitoring of an active/inactive state of a device. The certain period may be defined in technical specifications in advance, may be indicated to the UE by the base station, or may be indicated to the UE by the core NW apparatus.

The UE notifies the base station of information related to device communication failure. As another example, the UE may notify the core NW apparatus of the information. For example, in a case where a host in device communication is the core NW apparatus, the UE may notify the core NW apparatus of the information.

The notification may include information related to a device, for example, information related to identification of a device. This enables, for example, the base station and/or the core NW apparatus to promptly recognize a device with communication failure between the device and the UE. The notification may include information related to a time point at which device communication failure has occurred, or may include information related to time elapsed since device communication failure has occurred. The notification may include information related to a location of the UE at a timing of occurrence of device communication failure, or may include information related to a location of a device immediately before device communication failure. This enables, for example, the base station and/or the core NW apparatus to estimate an approximate location of a device.

The notification may use RRC signaling, MAC signaling, L1/L2 signaling, or signaling in an interface between the UE and the core NW, for example, NAS signaling.

The UE may perform a search for the device. The UE may perform a search for the device in response to device communication failure or in response to the notification to the base station and/or the core NW apparatus. The UE may keep performing a search for the device after the notification to the base station and/or the core NW apparatus.

The base station and/or the core NW apparatus may indicate, to the UE, a device search. The indication may be performed for another UE. For example, the base station and/or the core NW apparatus may transmit the indication for a UE located around the UE that has detected device communication failure. The neighboring UE may be a UE under control of the same base station as that for the UE that has detected the device communication failure, a UE present in the same cell as that for the UE, a UE that can perform communication with the device, a UE belonging to the same group as that for the UE, or a UE belonging to a certain group. The indication from the base station and/or the core NW apparatus may be performed in response to notification of device communication failure from the UE. The base station and/or the core NW apparatus may perform the indication for a plurality of UEs.

The certain group may be statically defined in technical specifications in advance, or may be determined by the base station or the core NW apparatus and notified to the UE. Information related to the certain group may be included in a configuration for communication between the UE and a device. Notification of the information related to the certain group may use RRC signaling, MAC signaling, L1/L2 signaling, or signaling between the core NW apparatus and the UE, for example, NAS signaling.

A device search by the UE may be performed in response to the indication from the base station and/or the core NW apparatus. This enables, for example, communication resource usage efficiency to be enhanced. As another example, the UE may perform a device search without the indication. This enables, for example, a device to be promptly searched.

The UE may notify the base station and/or the core NW apparatus of a result of a device search. The notification may include information related to the device, for example, information related to the presence or absence of the device, or may include information related to received power from the device.

The base station and/or the core NW apparatus may indicate, to a UE, a stop of a device search. The indication may be performed, for example, for a UE to which a device search is indicated. The UE may stop a device search in response to the indication. This can, for example, stop, after a certain UE finds a device, a device search in another UE, and, consequently, resource use efficiency in the communication system can be enhanced.

The indication related to a stop of a device search may include information related to a device, for example, identification information related to a device. The UE may stop a search for a device included in the indication. The UE may continue a search for a device not included in the indication. This enables, for example, flexible configuration related to a device search.

The UE may hold data to be transmitted to a device. For example, the UE may hold the data in occurrence of device communication failure. The data may be data transmitted from the base station and/or the core NW apparatus. As another example, the base station may hold the data, or the core NW apparatus may hold the data. Holding of the data in the base station and/or the core NW apparatus may be performed in response to notification of information related to device communication failure from the UE.

As another example, the UE may discard data to be transmitted to a device. For example, the UE may discard the data in response to detection of device communication failure or in response to a lapse of certain time from detection of device communication failure. This can, for example, reduce the memory usage in the UE.

Operation for data transmission/reception between the UE and a device may continue. For example, the UE may transmit data to the device or may receive data from the device. The device may transmit data to the UE or may receive data from the UE.

The operation for data transmission/reception between the UE and the device may continue for a certain period. The certain period may be statically defined in technical specifications in advance, or may be determined by the base station or the core NW apparatus and notified to the UE. The information may be included in a configuration for communication between the UE and a device. Notification of the information may use RRC signaling, MAC signaling, L1/L2 signaling, or signaling between the core NW apparatus and the UE, for example, NAS signaling.

As another example, the operation for data transmission/reception between the UE and the device may continue until a configuration used by the UE for communication with the device (sometimes referred to hereinafter as a device configuration) is released.

The UE may transmit, to the base station and/or the core NW apparatus, data received from a device. The data may be, for example, data less than a certain information unit. The data less than the certain information unit may be, for example, a fragment of a packet or data being retransmitted.

As another example, the UE may discard data received from a device. For example, the UE may discard the data in response to detection of device communication failure or in response to a lapse of certain time from detection of device communication failure. This can, for example, reduce the memory usage in the UE.

The base station or the core NW apparatus may indicate whether or not the UE discards data to be transmitted to a device. In response to the indication, the UE may hold or discard data to be transmitted to the device. This enables, for example, flexibility in the communication system to be enhanced.

The base station or the core NW apparatus may indicate whether or not the UE discards data received from a device. In response to the indication, the UE may transmit, to the base station and/or the core NW apparatus, data received from the device, or may discard the data. This enables, for example, flexibility in the communication system to be enhanced.

The UE may notify the base station and/or the core NW apparatus of information related to data that have already been transmitted to a device. The base station and/or the core NW apparatus may recognize, by using the information, data that have already been transmitted to the device.

The UE may hold a device configuration. This enables, for example, prompt recovery of communication with a device.

As another example, the UE may discard a device configuration. For example, the UE may discard the device configuration in response to detection of device communication failure or in response to a lapse of certain time from detection of device communication failure. This can, for example, reduce the memory usage in the UE.

The base station or the core NW apparatus may indicate whether the UE discards a device configuration. In response to the indication, the UE may hold or discard the device configuration. This enables, for example, flexibility in the communication system to be enhanced.

The UE may notify the base station and/or the core NW apparatus of a device configuration. The notification may be performed in response to device communication failure in the UE. The base station and/or the core NW apparatus may determine, by using the device configuration included in the notification, a device configuration to be used after recovery from the device communication failure.

A device may detect communication failure between the device and a UE (sometimes referred to hereinafter as UE communication failure). The device may detect the UE communication failure in response to failing to receive a signal from the UE continuously certain times or in response to failing to receive a signal from the UE continuously for a certain period. The signal from the UE may be, for example, a search indication from the UE, data transmission from the UE, or a signal related to monitoring of an active/inactive state from the UE. The certain times may be defined in technical specifications in advance, may be indicated to the device by the base station via the UE, or may be indicated to the device by the core NW apparatus via the UE. The same may apply to the certain period.

The device may transmit a signal to the UE in response to a signal not being transmitted to the UE for a certain period. The signal may be, for example, a signal for monitoring of an active/inactive state. The certain period may be defined in technical specifications in advance, may be indicated to the device by the base station via the UE, or may be indicated to the device by the core NW apparatus via the UE.

Recovery of communication between the device and a UE may be performed for the same UE as that before the communication failure.

The UE may determine, in response to receiving a signal from the device, that the UE has recovered from communication failure between the UE and the device. The signal may be a response to a search signal or may be a signal for monitoring of an active/inactive state transmitted from the device.

The UE may notify the base station and/or the core NW apparatus of recovery from device communication failure. The notification may use RRC signaling, MAC signaling, L1/L2 signaling, or signaling in an interface between the UE and the core NW, for example, NAS signaling. The notification may use the same signaling as that for the notification of the information related to device communication failure.

The UE may transmit data being held, in response to recovery from device communication failure. For example, in response to the recovery, the UE may transmit, to a device, data received from the base station. In communication between the UE and the device, a device configuration held by the UE may be used, for example.

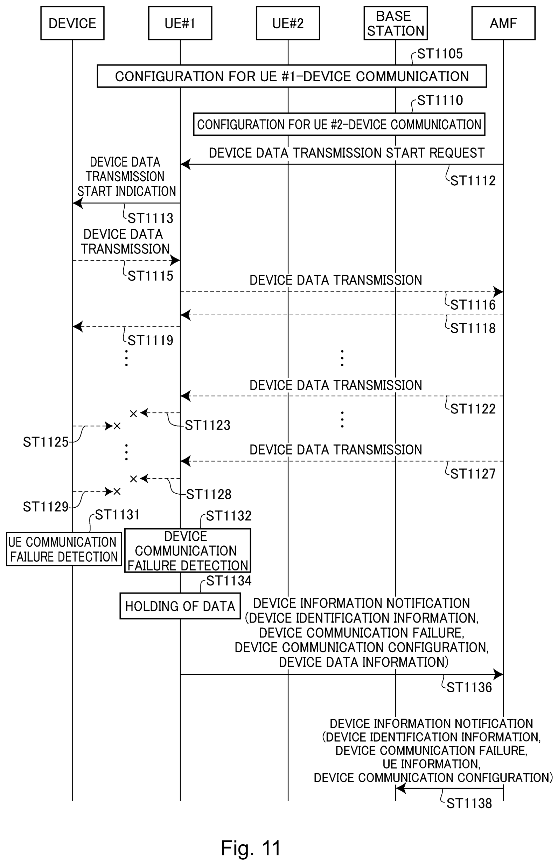

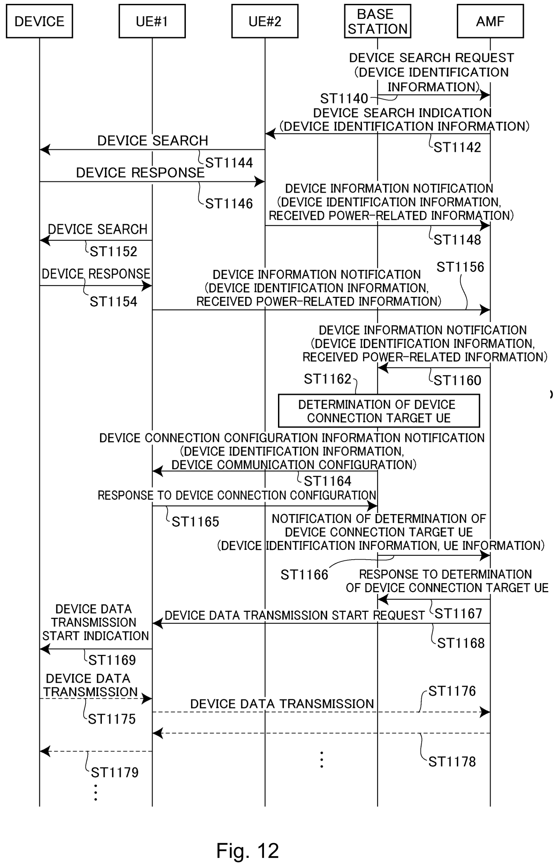

Figs. 11 and 12 are diagrams of a sequence illustrating an example of communication failure between the UE and the device and operation for recovery of the communication failure. Figs. 11 and 12 illustrate the first half and the second half of the sequence, respectively. The example illustrated in Figs. 11 and 12 illustrates an example in which UE communication failure occurs in a device communicating with UE #1, and communication between the device and same UE #1 recovers subsequently. The example of Figs. 11 and 12 illustrates a case where a host in communication with the device is an AMF.

In Step ST1105 illustrated in Fig. 11, configuration for communication between UE #1 and the device is performed between a base station and UE #1. In Step ST1105, the base station notifies UE #1 of a device connection configuration. The configuration may include information related to identification of the device. The notification may be performed by using RRC signaling, for example, RRC reconfiguration, by using MAC signaling, or by using L1/L2 signaling. UE #1 transmits, to the base station, a response to the device connection configuration. The response may be performed by using RRC signaling, for example, RRC reconfiguration completion, by using MAC signaling, or by using L1/L2 signaling.

In Step ST1110, configuration for communication between UE #2 and the device is performed between the base station and UE #2. In Step ST1110, the same processing as that of Step ST1105 is performed between the base station and UE #2.

In Step ST1112 illustrated in Fig. 11, the AMF requests UE #1 to perform data transmission from the device. Note that, in the following description, data transmitted by the device are sometimes referred to as device data. In Step ST1113, UE #1 indicates, to the device, a start of transmission of device data.

In Steps ST1115 and ST1116 illustrated in Fig. 11, the device transmits data to the AMF via UE #1. Step ST1115 and Step ST1116 indicate data transmission from the device to UE #1 and data transmission from UE #1 to the AMF, respectively.

In Steps ST1118 and ST1119 illustrated in Fig. 11, the AMF transmits data to the device via UE #1. Step ST1118 and Step ST1119 indicate data transmission from the AMF to UE #1 and data transmission from UE #1 to the device, respectively.

In Step ST1122 illustrated in Fig. 11, data transmission from the AMF to UE #1 is performed. In Step ST1123, data of Step ST1122 is transmitted from UE #1 to the device, but the device fails to receive the data.

In Step ST1125 illustrated in Fig. 11, data transmission from the device to UE #1 is performed, but UE #1 fails to receive the data.

Step ST1127 and Step ST1128 illustrated in Fig. 11 are the same as Step ST1122 and Step ST1123. As in Step ST1123, the device fails to receive data in Step ST1128.

In Step ST1129 illustrated in Fig. 11, as in Step ST1125, data is transmitted from UE #1 to the device, but the device fails to receive the data.

In Step ST1131 illustrated in Fig. 11, the device detects communication failure between the device and UE #1. The detection may be performed in response to the device failing to receive the data transmitted from UE #1 in Step ST1128.

In Step ST1132 illustrated in Fig. 11, UE #1 detects device communication failure. The detection may be performed in response to UE #1 failing to receive the transmitted data from the device in Step ST1129.

In Step ST1134 illustrated in Fig. 11, UE #1 holds data to be transmitted to the device. The data held by UE #1 may be data received from the AMF in Steps ST1122 and ST1127.

In Step ST1136 illustrated in Fig. 11, UE #1 notifies the AMF of information related to the device. The notification may include information related to the device communication failure, may include information related to identification of the device, or may include information related to a configuration used for communication with the device. The notification may include the data held in Step ST1134. The notification may use, for example, NAS signaling. In response to the notification of Step ST1136, the AMF recognizes the device communication failure in UE #1.

In Step ST1138 illustrated in Fig. 11, the AMF notifies the base station of information related to the device. The notification may include information related to the device communication failure, may include information related to identification of the device, may include information related to the UE with the device communication failure (for example, information related to identification of the UE), or may include information related to a configuration used for communication with the device. In response to the notification of Step ST1138, the base station recognizes the device communication failure in UE #1.

In Step ST1140 illustrated in Fig. 12, the base station requests the AMF to perform a device search. The request may include information related to the device, may include information related to the device communication failure, or may include information related to the UE with the device communication failure. In Step ST1142, the AMF indicates a device search to UE #2. The indication may or may not include information related to the device. The indication may be indication specifying a device to be searched. For example, in a case where the information related to the device is included in Step ST1142, the indication may be indication specifying a device to be searched. As another example, the indication may be indication not specifying a device to be searched. For example, in a case where the information related to the device is not included in Step ST1142, the indication may be indication not specifying a device to be searched.

In Step ST1144 illustrated in Fig. 12, UE #2 performs a device search. The search may be performed in response to the device search indication from the AMF. In Step ST1146, the device transmits a response to UE #2. The response may include information related to identification of the present device. In the transmission from the device to UE #2 in Step ST1146, UE #2 may transmit a radio wave to the device. The device may perform the transmission in Step ST1146 by using the radio wave from UE #2. UE #2 acquires information on the device by using Step ST1146. UE #2 measures received power in Step ST1146.

In Step ST1148 illustrated in Fig. 12, UE #2 notifies the AMF of information related to the searched device. The notification may include information related to identification of the device, may include information related to a result of the power measurement, or may include information related to a reception error rate. The transmission in Step ST1148 may use, for example, NAS signaling.

Step ST1148 may include only information related to a device as a target of the search indication, or may include information indicating whether the device has been found. This can, for example, reduce the amount of signaling from UE #2 to the AMF. As another example, Step ST1148 may include information related to some or all of devices searched and found by UE #2. This enables, for example, the AMF to promptly perform processing for a start of connection to a device other than a device as a target of the search indication.

In Step ST1152 illustrated in Fig. 12, UE #1 performs a device search. The search may be performed by UE #1 independently, or may be performed in response to device search indication from the AMF. In the example illustrated in Fig. 12, UE #1 performs the search independently. In Step ST1154, the device transmits a response to UE #1. The response may include information related to identification of the present device. In the transmission from the device to UE #1 in Step ST1154, UE #1 may transmit a radio wave to the device. The device may perform the transmission in Step ST1154 by using the radio wave from UE #1. UE #1 acquires information on the device by using Step ST1154. UE #1 measures received power in Step ST1154.

In Step ST1156 illustrated in Fig. 12, UE #1 notifies the AMF of information related to the searched device. The notification may include information related to identification of the device, may include information related to a result of the power measurement, or may include information related to a reception error rate. The transmission in Step ST1148 may use, for example, NAS signaling.

In Step ST1160 illustrated in Fig. 12, the AMF notifies the base station of information related to the searched device. The notification may include the information notified in Step ST1148 or may include the information notified in Step ST1156. In Step ST1162, the base station determines a target UE to which the device is to be connected. In the example illustrated in Fig. 12, the target UE to which the device is to be connected is determined to be UE #1.

In Steps ST1164 and ST1165 illustrated in Fig. 12, the same processing as that of Step ST1105 is performed. In Step ST1164, the base station notifies UE #1 of a device connection configuration. The configuration may include information related to identification of the device. The notification may be performed by using RRC signaling, for example, RRC reconfiguration, by using MAC signaling, or by using L1/L2 signaling. In Step ST1165, UE #1 transmits, to the base station, a response to the device connection configuration. The response may be performed by using RRC signaling, for example, RRC reconfiguration completion, by using MAC signaling, or by using L1/L2 signaling.

In Step ST1166 illustrated in Fig. 11, the base station notifies the AMF of determination of the target UE to which the device is to be connected. The notification may include information related to identification of the device or may include information related to the determined UE. In Step ST1167, the AMF transmits, to the base station, a response to Step ST1166.

In Steps ST1168 and ST1169 illustrated in Fig. 12, the same processing as that of Steps ST1112 and ST1113 is performed.

In Steps ST1175 and ST1176 illustrated in Fig. 12, the same processing as that of Steps ST1115 and ST1116 is performed. In Steps ST1178 and ST1179, the same processing as that of Steps ST1118 and ST1119 is performed.

In the example illustrated in Figs. 11 and 12, the AMF may indicate, to UE #1 and/or UE #2, a stop of a device search. For example, the indication of the stop may be performed after Step ST1148, after Step ST1156, after Step ST1160, after Step ST1166, or after Step ST1167. This enables, for example, usage efficiency of the communication system to be enhanced.

Recovery of communication between the device and a UE may be performed for a UE different from that before the communication failure.

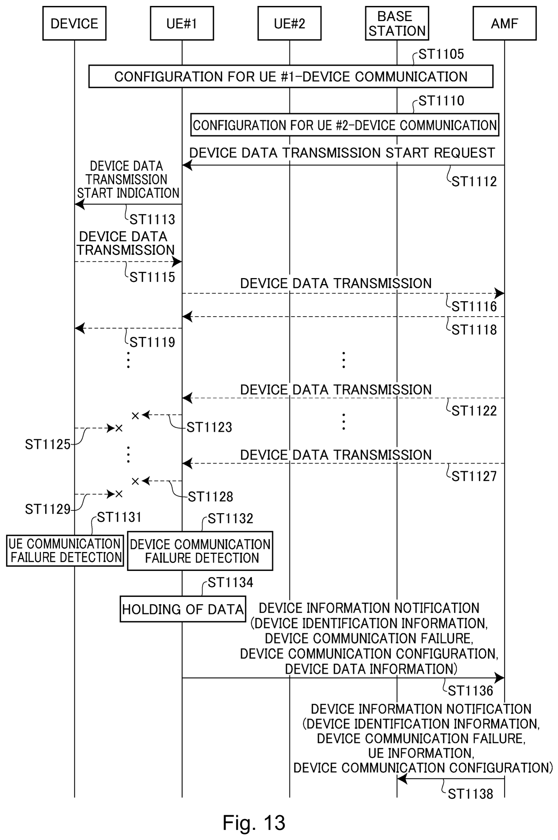

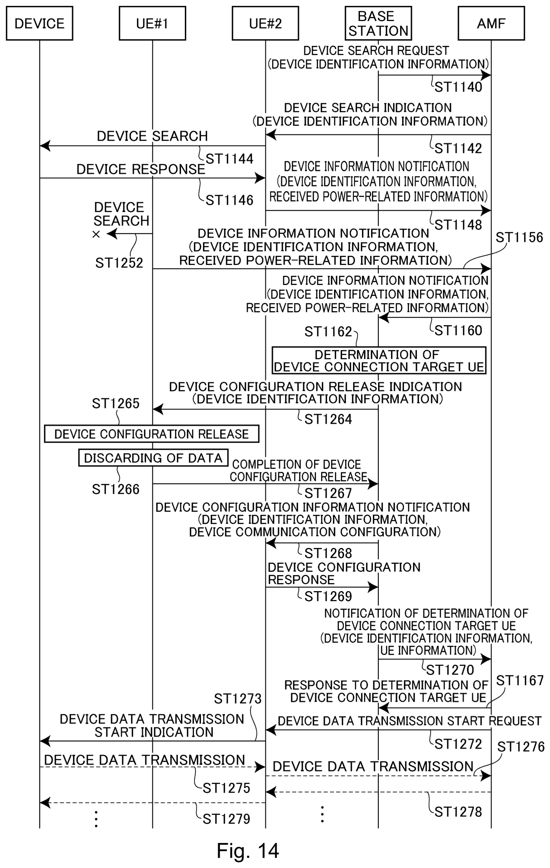

Figs. 13 and 14 are diagrams of a sequence illustrating another example of the communication failure between the UE and the device and the operation for recovery of the communication failure. Figs. 13 and 14 illustrate the first half and the second half of the sequence, respectively. The example illustrated in Figs. 13 and 14 illustrates an example in which UE communication failure occurs in a device communicating with UE #1, and communication between the device and UE #2 recovers subsequently. The example of Figs. 13 and 14 illustrates a case where a host in communication with the device is an AMF. In Figs. 13 and 14, the same step numbers are applied to the same processing as that of Figs. 11 and 12, and the common description thereof is omitted.

Steps ST1105 to ST1148 illustrated in Fig. 13 and Fig. 14 are the same as those of Figs. 11 and 12.

In Step ST1252 illustrated in Fig. 14, UE #1 performs a device search. The search may be performed in a manner similar to that of Step ST1152 illustrated in Fig. 12. In the example illustrated in Fig. 14, the device fails to receive the device search of Step ST1252, and, consequently, UE #1 fails to receive a response from the device.

Steps ST1156 to ST1162 illustrated in Fig. 14 are the same as those of Fig. 12. In the example illustrated in Fig. 14, the notification of Step ST1156 may include information indicating that UE #1 has failed to receive a response from the device. In the example illustrated in Fig. 14, in Step ST1162, the base station determines that a target UE to which the device is to be connected is UE #2.

In Step ST1264 illustrated in Fig. 14, the base station indicates, to UE #1, a release of a device configuration. The indication may include information related to identification of the device. The indication may be performed by using RRC signaling, for example, RRC reconfiguration, by using MAC signaling, or by using L1/L2 signaling. In Step ST1265, UE #1 releases a device configuration. In Step ST1266, UE #1 discards held data. The data discarded by UE #1 may be, for example, data received from the AMF in Step ST1122 and Step ST1127. In Step ST1267, UE #1 notifies the base station of completion of the release of the device configuration. The notification may be performed by using RRC signaling, for example, RRC reconfiguration completion, by using MAC signaling, or by using L1/L2 signaling.

In Step ST1270 illustrated in Fig. 14, the base station notifies the AMF of determination of the target UE to which the device is to be connected. The information may include information related to identification of the device or may include information related to a UE determined to be the connection target. The AMF recognizes, in response to the notification, that a UE to be connected to the device has been switched to UE #2.

Step ST1167 illustrated in Fig. 14 is the same as that of Fig. 12.

In Steps ST1272 and ST1273 illustrated in Fig. 14, the same processing as that of Steps ST1112 and ST1113 is performed via UE #2.

In Steps ST1275 and ST1276 illustrated in Fig. 14, the same processing as that of Steps ST1115 and ST1116 is performed via UE #2. In Steps ST1278 and ST1279, the same processing as that of Steps ST1118 and ST1119 is performed via UE #2.

Device search indication to the UE may be performed in advance by broadcast information, for example, system information. System information related to a device search for the UE may be newly provided. The information may include information related to a time and/or frequency resource(s) used for a device search, may use information related to power used for a device search, or may include information related to a device to be searched. The information may include information related to a periodicity at which a device search is performed, may include information related to a timing of a start of a device search, or may include information related to a period in which a device search is performed. The UE that has received the system information may perform a device search. The UE may be an RRC _CONNECTED UE, an RRC_INACTIVE UE, or an RRC_IDLE UE. This can, for example, reduce the amount of signaling related to device search indication.

The UE may notify the base station and/or the core NW apparatus of a result of a device search. The UE may be, for example, a UE that has performed a device search in response to indication by the system information. The UE may be, for example, a UE that has found one or more devices. The UE may be an RRC_CONNECTED UE, an RRC_INACTIVE UE, or an RRC_IDLE UE. The notification may use Small Data Transmission (SDT) (see NPL 2). This enables, for example, the base station and/or the core NW apparatus to acquire information related to a device(s) from many UEs.

Another solution will be disclosed. The UE may notify a neighboring UE of information related to device communication failure. The notification may use, for example, PC5. The neighboring UE may perform a device search in response to the notification.

The notification from the UE to the neighboring UE may be performed when the UE is outside of coverage of the base station or when the UE is present in coverage of the base station.

According to the first embodiment, recovery of communication between a device and a UE can be performed even when device communication failure occurs, and, consequently, recovery of a connection of the device to the communication system can be performed.

### Second Embodiment

A situation is considered in which movement of a UE to which a device is connected changes a radio wave environment between the UE and a base station, thereby making communication between the UE and the base station unavailable. However, with respect to communication with the device, a method of recovering from such a situation is not disclosed. Thus, this poses a problem that, after communication between the UE and the base station is made unavailable, communication between the device and the communication network cannot be continued.

The present embodiment will disclose a method for solving such problems.

A UE stops communication with a device. The stop in the UE may be performed, for example, in occurrence of Radio Link Failure (RLF).

The UE may hold data received from the device. For example, the UE may hold the data in response to RLF detection.

As another example, the UE may discard data received from a device. For example, the UE may discard the data in response to RLF detection or in response to a lapse of certain time from RLF detection. This can, for example, reduce the memory usage in the UE.

The UE may transmit, to the device, data received from a base station and/or core NW apparatus. The data may be, for example, data less than a certain information unit. The data less than the certain information unit may be, for example, a fragment of a packet or data being retransmitted.

As another example, the UE may discard data received from the base station and/or the core NW apparatus. For example, the UE may discard the data in response to RLF detection or in response to a lapse of certain time from RLF detection. This can, for example, reduce the memory usage in the UE.

The base station or the core NW apparatus may indicate whether or not the UE discards data to be transmitted to the base station and/or the core NW apparatus. The base station and/or the core NW apparatus may perform the indication to the UE in advance. In response to the indication, the UE may hold or discard data to be transmitted to the device. This enables, for example, flexibility in the communication system to be enhanced.

The base station or the core NW apparatus may indicate whether or not the UE discards data to be transmitted to a device. The base station and/or the core NW apparatus may perform the indication to the UE in advance. In response to the indication, the UE may transmit held data to the device or may discard the data. This enables, for example, flexibility in the communication system to be enhanced.

The UE may discard a device configuration. For example, the UE may discard the device configuration in response to RLF detection or in response to a lapse of certain time from RLF detection. This can, for example, reduce the memory usage in the UE.

As another example, the UE may hold a device configuration. For example, the UE may hold the device configuration after RLF detection.

The base station or the core NW apparatus may indicate whether or not the UE releases a device configuration. The base station and/or the core NW apparatus may perform the indication to the UE in advance. In response to the indication, the UE may hold or discard the device configuration. This enables, for example, flexibility in the communication system to be enhanced.

The above-described operation may be performed in response to CM-IDLE state transition of the UE. For example, the above-described operation in response to the CM-IDLE state transition may be performed in a case where a host in communication with a device is the core NW apparatus.

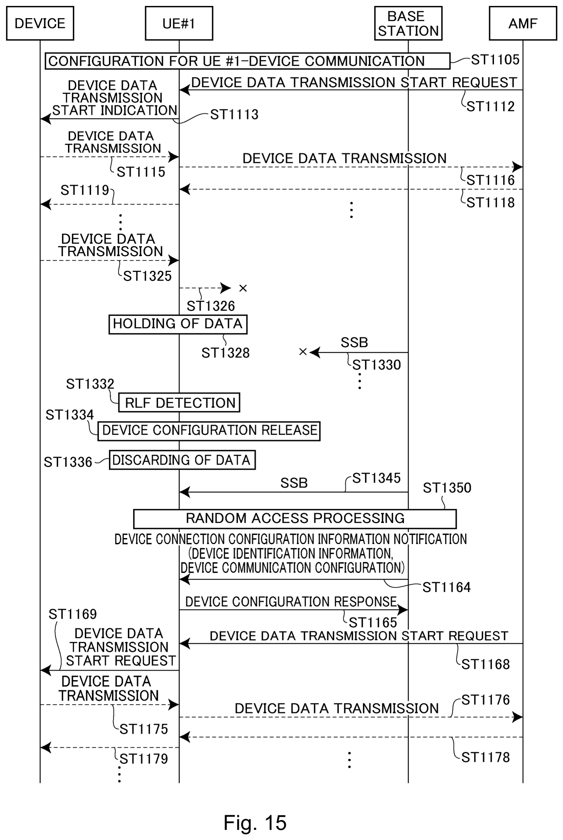

Fig. 15 is a sequence diagram illustrating an example of RLF in the UE connected to the device and operation for recovery of the RLF. The example of Fig. 15 illustrates a case where communication with the device is not performed in RLF. The example of Fig. 15 illustrates a case where a host in communication with the device is an AMF. In Fig. 15, the same step numbers are applied to the same processing as that of Figs. 11 and 12, and the common description thereof is omitted.

Steps ST1105 to ST1119 illustrated in Fig. 15 are the same as those of Fig. 11.

In Step ST1325 illustrated in Fig. 15, the device transmits data to UE #1. In Step ST1326, UE #1 attempts to transmit data to the AMF via the base station, but the base station fails to receive Step ST1326. In Step ST1328, UE #1 holds the data received in Step ST1325.

In Step ST1330 illustrated in Fig. 15, the base station transmits an SS block to UE #1, but UE #1 fails to receive the SS block. In Step ST1332, UE #1 detects RLF. Step ST1332 may be performed in response to UE #1 failing to detect the SS block.

In Step ST1334 illustrated in Fig. 15, UE #1 releases a device configuration. In Step ST1336, UE #1 discards held data. The data discarded by UE #1 may be, for example, the data received in Step ST1325.

In Step ST1345 illustrated in Fig. 15, the base station transmits an SS block to UE #1, and UE #1 receives the SS block. In Step ST1350, random access processing is performed between UE #1 and the base station, and a connection between the base station and UE #1 is reestablished.

Steps ST1164 to ST1179 illustrated in Fig. 15 are the same as those of Fig. 12.

A timer related to device configuration may be provided. The UE may include the timer. The timer may be provided for each device or may be common to devices.

The timer may be started in response to RLF detection in the UE. The timer may be stopped in response to reestablishment of a connection between the UE and the base station, or may be stopped in response to completion of random access processing between the UE and the base station. As another example, the timer may be stopped in response to device configuration release indication from the base station. In response to expiration of the timer, the UE may discard a device configuration.

As another example, the timer may be started in response to CM-IDLE transition of the UE. The timer may be stopped in response to CM-CONNECTED transition of the UE. As another example, the timer may be stopped in response to device configuration release indication from the base station. In response to expiration of the timer, the UE may discard a device configuration.

A timer related to device data may be provided. The UE may include the timer. The timer may be provided for each device or may be common to devices. Conditions of start and stop of the timer related to device data and operation in expiration of the timer may be the same as those for the timer related to device configuration.

The timer related to a device configuration and the timer related to device data may be integrated with each other. For example, in response to expiration of the integrated timer, the UE may discard a device configuration and held data. This enables, for example, complexity in the communication system to be avoided.

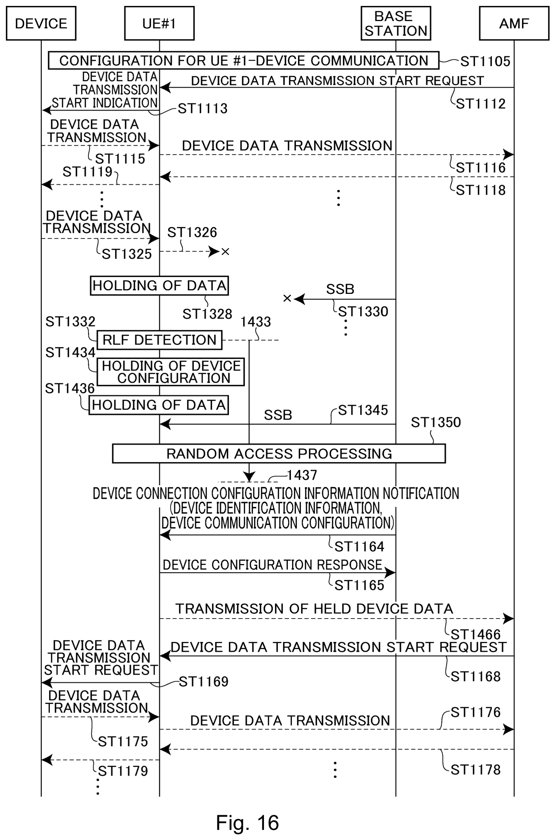

Fig. 16 is a sequence diagram illustrating another example of the RLF in the UE connected to the device and the operation for recovery of the RLF. The example of Fig. 16 illustrates a case where communication with the device is continued after RLF. The example of Fig. 16 illustrates a case where a host in communication with the device is an AMF. In Fig. 16, the same step numbers are applied to the same processing as that of Figs. 11, 12, and 15, and the common description thereof is omitted.

Steps ST1105 to ST1119 illustrated in Fig. 16 are the same as those of Fig. 11.

Steps ST1325 to ST1332 illustrated in Fig. 16 are the same as those of Fig. 15. UE #1 activates the device configuration timer/device data timer in response to Step ST1332. In the example illustrated in Fig. 16, a start timing and an expiration timing of the timer are indicated by a dotted line 1433 and a dotted line 1437, respectively.

Steps ST1345 to ST1350 illustrated in Fig. 16 are the same as those of Fig. 15. UE #1 stops the device configuration timer/device data timer in response to completion of Step ST1350.

Steps ST1164 and ST1165 illustrated in Fig. 16 are the same as those of Fig. 12.

In Step ST1466 illustrated in Fig. 16, UE #1 transmits, to the AMF, held device data. The data transmitted in Step ST1466 may be, for example, the data received in Step ST1325.

Steps ST1168 to ST1179 illustrated in Fig. 16 are the same as those of Fig. 12.

The device connected to the UE that has detected RLF may be connected to another UE. The base station may detect failure in a connection with the UE. In response to detection of the connection failure, the base station may indicate a device search to another UE. In response to the indication, such another UE may perform a device search. Such another UE may notify the base station of information related to a result of the device search. The base station may determine, by using the notification, a device connection target UE.

As another example, the base station may notify the core NW apparatus of information related to failure in a connection with the UE. In response to the notification, the core NW apparatus may indicate a device search to another UE. The operation may be performed, for example, in a case where a host for the device is the core NW apparatus. In response to the indication, such another UE may perform a device search. Such another UE may notify the core NW apparatus of information related to a result of the device search. The core NW apparatus may notify the base station of the information. The base station may determine, by using the notification, a device connection target UE.

The core NW apparatus, for example, the AMF may detect failure in a connection with the UE. The core NW apparatus may perform the detection, for example, in response to CM-IDLE transition of the UE. The core NW apparatus, for example, the AMF may notify the base station of failure in a connection with the UE.

As another example, in response to the detection, the core NW apparatus may indicate a device search to another UE. The operation may be performed, for example, in a case where a host for the device is the core NW apparatus. In response to the indication, such another UE may perform a device search. Such another UE may notify the core NW apparatus of information related to a result of the device search. The core NW apparatus may notify the base station of the information. The base station may determine, by using the notification, a device connection target UE.

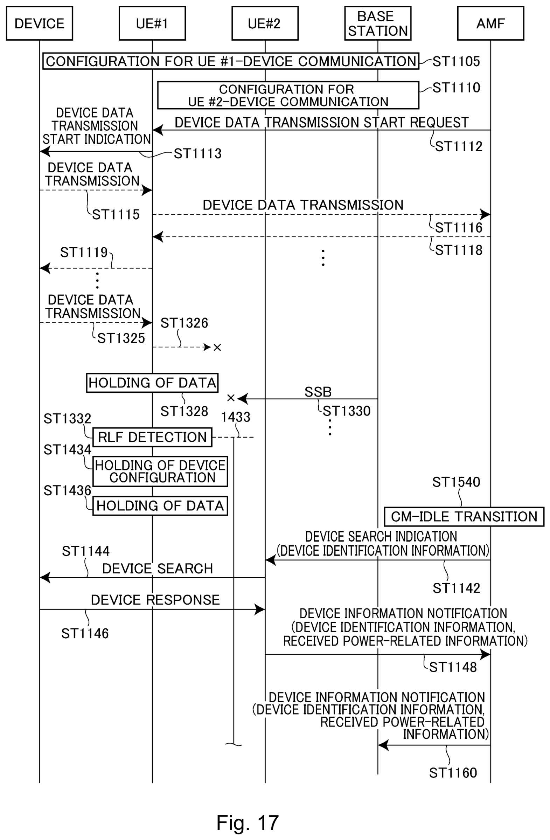

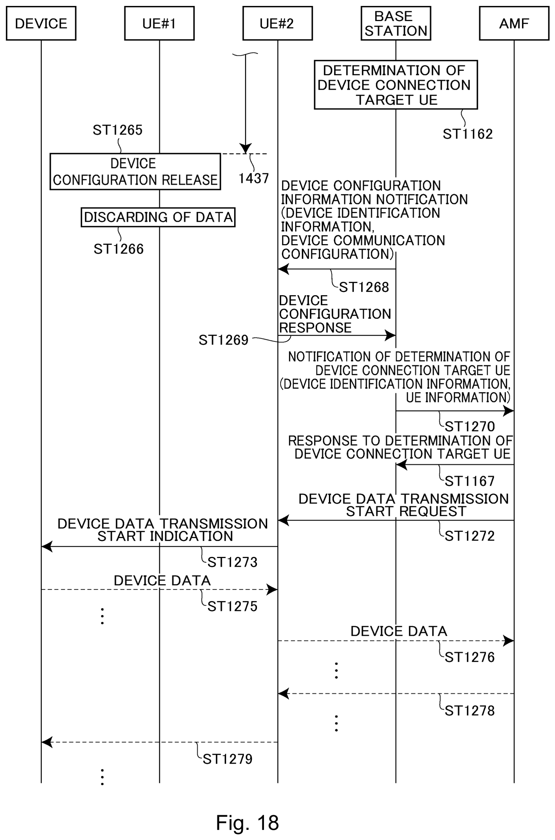

Figs. 17 and 18 are diagrams of a sequence illustrating another example of the RLF in the UE connected to the device and the operation for recovery of the RLF. Figs. 17 and 18 illustrate the first half and the second half of the sequence, respectively. The example of Figs. 17 and 18 illustrates a case where, after RLF is detected in UE #1 to which the device is connected, a device connection target UE is switched to UE #2. The example of Figs. 17 and 18 illustrates a case where a host in communication with the device is an AMF. In Figs. 17 and 18, the same step numbers are applied to the same processing as that of Figs. 11 to 16, and the common description thereof is omitted.

Steps ST1105 to ST1119 illustrated in Fig. 17 are the same as those of Fig. 11.

Steps ST1325 to ST1332 illustrated in Fig. 17 are the same as those of Fig. 15. UE #1 activates the device configuration timer/device data timer in response to Step ST1332. In the example illustrated in Figs. 17 and 18, a start timing and an expiration timing of the timer are indicated by a dotted line 1433 and a dotted line 1437, respectively.

In Step ST1540 illustrated in Fig. 17, the AMF detects CM-IDLE transition of a CM state for UE #1. The AMF performs Step ST1142 in response to Step ST1540.

Steps ST1142 to ST1162 illustrated in Figs. 17 and 18 are the same as those of Fig. 11. In the example illustrated in Figs. 17 and 18, the target UE to which the device is to be connected is determined to be UE #2 in Step ST1162.

In Fig. 18, UE #1 performs Steps ST1265 and ST1266 in response to arrival of the expiration timing 1437 of the device configuration timer/device data timer. Processing of Steps ST1265 and ST1266 in Fig. 18 is the same as that of Fig. 14.

Steps ST1268 to ST1270 illustrated in Fig. 18 are the same as those of Fig. 14.

Step ST1167 illustrated in Fig. 18 is the same as that of Fig. 12.

Steps ST1272 to ST1279 illustrated in Fig. 18 are the same as those of Fig. 14.

Figs. 17 and 18 illustrate the example in which the AMF performs, to UE #2, the device search indication indicated by Step ST1142, but the AMF may perform, to UE #1, the device search indication indicated by Step ST1142. This enables, for example, UE #1 to perform a device search in a case where UE #1 has recovered from RLF, and, consequently, communication between a device and the communication network can recover promptly.

The UE connected to the device may be connected to another base station. For example, the UE with RLF may be connected to another base station.

The UE may perform a stop of communication with the device, discarding of data received from the device, discarding of data received from the base station and/or the core NW apparatus, and/or release of a device configuration, in response to RRC release (RRCRelease). This can, for example, reduce the memory usage in the UE after RRC release.

According to the second embodiment, recovery of communication between a device and a UE can be performed even when RLF occurs, and, consequently, recovery of a connection of the device to the communication system can be performed.

### Third Embodiment

Services using the communication network include a service requiring extremely high reliability, such as communication with a sensor used for remote control of a robot (see section 7.11 of NPL 35 (3GPP TS 22.261)). Using a device for such a service poses a problem of securing reliability.

The present embodiment will disclose a method for solving such a problem.

In the present embodiment for solving the problem, connection between a device and the communication network is performed via a plurality of UEs. The device may be connected to a plurality of UEs. The device may be connected, for example, in parallel to a plurality of UEs.

Connection between a device and the communication network may be performed via a plurality of base stations. The device may be connected to a plurality of base stations. The device may be connected, for example, in parallel to a plurality of base stations.

Connection between a device and the communication network may be performed via a plurality of UEs and a plurality of base stations. The device may be connected to a plurality of UEs and a plurality of base stations. The device may be connected, for example, in parallel to a plurality of UEs and/or a plurality of base stations.

Device configuration may be performed for each UE connected to the device. The configuration may be performed by a base station or core NW apparatus. The configuration may include information indicating connection with a plurality of UEs.

The UE may measure received power of a signal from the device. The UE may transmit, to the base station, information related to a measurement result of the received power from the device. For example, the base station may determine, by using the information transmitted from the UE, a UE to be used for connection with the device.

Notification, from the UE to the base station, of information related to power received from the device may be performed in response to indication from the base station, may be performed periodically, or may be performed in response to satisfying a certain condition (event) and/or not satisfying the condition (event). The base station may notify the UE of information related to the certain condition. The information may be included in a configuration of communication between the UE and the device (for example, Step ST1105 in Fig. 11).

Notification of the information is performed in response to satisfying the condition (event), thereby enabling, for example, the base station to promptly determine a start of communication with a device using a plurality of paths. Notification of the information is performed in response to not satisfying the condition (event), thereby enabling, for example, the base station to promptly determine an end of communication with a device using a plurality of paths.

As examples of the certain condition, (a1) to (a10) will be disclosed below.

(a1) Received power from the device is less than a certain threshold, or less than or equal to a certain threshold.

(a2) A path loss between the device and the UE is greater than a certain threshold, or greater than or equal to a certain threshold.

(a3) Power used for transmission to the device is greater than a certain threshold, or greater than or equal to a certain threshold.

(a4) A Signal to Interference plus Noise Ratio (SINR) of a received signal from the device is less than a threshold, or less than or equal to a threshold.

(a5) A reception error rate of a received signal from the device is greater than a threshold, or greater than or equal to a threshold.

(a6) A ratio of power transmitted to the device to power received from the device (transmission power/reception power) is greater than a threshold, or greater than or equal to a threshold.

(a7) A ratio of power received from the device to power transmitted to the device (reception power/transmission power) is less than a threshold, or less than or equal to a threshold.

(a8) Received power in the UE of a signal transmitted by the device using a radio wave from another UE and/or base station as a power source is greater than or greater than or equal to received power in the present UE of a signal transmitted by the device using a radio wave from the present UE as a power source.

(a9) A distance between the UE and the device is greater than a threshold, or greater than or equal to a threshold.

(a10) Combinations of (a1) to (a9) described above.

(a1) described above enables the base station to promptly recognize reduction in received power from the device in the UE, and, consequently, communication between the device and the communication network can be continued.

(a2) described above enables the base station to promptly recognize increase in a path loss from the device in the UE, and, consequently, communication between the device and the communication network can be continued, and interference on another UE or the like can be reduced by preventing excessive increase in transmission power of the UE.

(a3) described above enables the base station to prevent excessive increase in transmission power of the UE, and, consequently, interference on another UE or the like can be reduced.

(a4) described above enables the base station to promptly recognize increase in interference around the UE, and, consequently, communication between the device and the communication network can be continued.

(a5) described above enables the base station to configure the condition without depending on reception performance and/or demodulation performance of the UE, and, consequently, complexity of configuration of the condition can be avoided.

For (a6) described above, the UE may determine, by using information measured in the present UE, whether the certain condition is satisfied. For example, this causes feedback from the device to the UE to be unnecessary, and, consequently, the amount of signaling between the device and the UE can be reduced.

Using (a7) described above enables a value of the ratio to be calculated by the UE to be suppressed to a small value, and, consequently, integer overflow in the calculation can be prevented, thereby enabling malfunction in the UE to be prevented.

(a8) described above enables the base station to recognize the presence of a UE or a base station more suitable than the UE for a connection target of the device, and, consequently, quality of communication between the device and the communication network can be secured.

(a9) described above enables the base station to promptly recognize an increased distance between the UE and the device being inappropriate for communication, and, consequently, communication between the device and the communication network can be continued.

An offset may be provided for the above-described threshold related to the condition. For example, the UE may determine whether the condition is satisfied, based on a value obtained by adding an offset to the above-described threshold, the UE may determine whether the condition is satisfied, based on a value obtained by subtracting an offset from the above-described threshold, the UE may compare, with the threshold, a value obtained by adding an offset to a result measured or derived by the present UE, or the UE may compare, with the threshold, a value obtained by subtracting an offset from a result measured or derived by the present UE. This enables, for example, the base station to configure the condition flexibly.

A plurality of the above-described offsets may be provided. For example, the UE may compare, with a value obtained by subtracting a second offset from the threshold, a value obtained by adding a first offset to a result measured or derived by the present UE, the UE may compare, with a value obtained by adding a second offset to the threshold, a value obtained by subtracting a first offset from a result measured or derived by the present UE, the UE may compare, with a value obtained by adding a second offset to the threshold, a value obtained by adding a first offset to a result measured or derived by the present UE, or the UE may compare, with a value obtained by subtracting a second offset from the threshold, a value obtained by subtracting a first offset from a result measured or derived by the present UE. This enables, for example, the base station to configure the condition more flexibly.

As another example of the above-described offset, an offset used for determination of whether the condition is satisfied and an offset used for determination of whether the condition is not satisfied may be different from each other. For example, hysteresis may be provided for the condition. For example, this can prevent excessive notification of the information from the UE to the base station due to frequent occurrence of cases where the condition is satisfied and cases where the condition is not satisfied.

Values of the above-described one or plurality of offsets may be defined in technical specifications, or may be determined by the base station and broadcast or notified to the UE. For example, the base station may notify the above-described information related to the condition including information related to the offset(s). This can, for example, reduce the number of times of signaling between the base station and the UE. As another example, the base station may notify information related to the offset(s) by using signaling different from that for notification of the above-described information related to the condition. This enables, for example, the base station to configure the condition flexibly.

The base station may notify the UE of information related to the offset(s) by using RRC signaling. This enables, for example, the base station to notify the UE of more information. As another example, the base station may notify the information by using MAC signaling. This enables, for example, the base station to promptly notify the UE of the information. As another example, the base station may notify the information by using L1/L2 signaling. This enables, for example, the base station to notify the UE of the information more promptly.

Transmission/reception of the same data may be performed between the device and each UE. The device may transmit the same data to a plurality of UEs. The plurality of UEs may each transmit the same data to a base station and/or core NW apparatus. The base station and/or the core NW apparatus may transmit the same data to a plurality of UEs. The plurality of UEs may each transmit the same data to the device.

This poses the following problem. In other words, the device fails to determine whether data received from the respective UEs are the same data as each other. For example, in a case where the data are data indicating some operation for apparatus associated with the device, malfunction occurs in which the device performs the same operation multiple times.

A method for solving the problem described above will be disclosed. Information related to identification is added to data transmitted and received between the device and the communication network. The same may apply to signaling transmitted and received between the device and the communication network.

The device deletes received duplicated data. For example, the device may hold only the first received data and discard data received from another UE.

The base station and/or the core NW apparatus deletes received duplicated data. For example, the base station and/or the core NW apparatus may hold only data received first from a certain UE and discard data received from another UE.

The information related to identification may be, for example, a sequence number. The information may be applied in a layer that terminates between the device and the base station and/or the core NW apparatus. The layer may be, for example, a TCP layer, a UDP layer, an IP layer, or an application layer. The information may be applied to the data itself or may be applied to a header of the data. The information may be uniquely applied among data transmitted and received between the device and the communication network, may be uniquely applied among signaling transmitted and received between the device and the communication network, or may be uniquely applied through data and signaling transmitted and received between the device and the communication network. The information may be uniquely applied among each or all of data and/or signaling transmitted from the device to the communication network and data and/or signaling transmitted from the communication network to the device.

The device may discard duplicated data by using the information. For example, the device may discard data to which the same information is applied. Discarding of duplicated data in the base station and/or the core NW apparatus may be performed in the same manner.

Device configuration performed to a UE by the base station and/or the core NW apparatus may include information related to duplication. The information related to duplication may include, for example, information indicating a start of duplication, information related to a UE through which duplicated data pass, or information related to identification of communication using a plurality of paths. By using the information, the device may start operation for detection of duplication of data received from the communication NW or may delete duplicatedly received data. By using the information, the device may start duplication of data to be transmitted to the communication NW. By using the information, the device may transmit data to a plurality of UEs. For example, the device may start duplication of the data to be transmitted or may start operation for detection of duplication of the received data, in response to matching of information related to identification of communication using a plurality of paths received from a plurality of UEs. This enables, for example, the device to promptly recognize a start of duplication of data.

The duplication may be performed for each of downlink communication (communication from the communication network to the device) and uplink communication (communication from the device to the communication network). This enables, for example, flexibility in the communication system to be enhanced.

Device configuration performed to a UE by the base station and/or the core NW apparatus may include information related to duplication for downlink communication. The information may include information indicating deletion of received duplicated data or information related to identification of communication using a plurality of paths.

The device configuration performed to a UE by the base station and/or the core NW apparatus may include information related to duplication for uplink communication. The information may include information indicating duplication of data, information indicating transmission to a plurality of UEs, information related to a transmission target UE, or information related to identification of communication using a plurality of paths.

As another example of the information related to the duplication, the information may include information indicating a stop of duplication, information related to a data transmission target UE after a stop of duplication, or information related to identification of communication for which duplication is to be stopped. By using the information, the device may stop deletion of data received from a plurality of UEs. By using the information, the device may stop duplication of data. This enables, for example, the device to promptly recognize a stop of duplication of data.

A stop of the duplication may be performed for each of downlink communication and uplink communication. This enables, for example, flexibility in the communication system to be enhanced.

The device configuration performed to a UE by the base station and/or the core NW apparatus may include information indicating a stop of duplication for downlink communication. The information may include information indicating a stop of deletion of received duplicated data or information related to identification of communication using a plurality of paths.

The device configuration performed to a UE by the base station and/or the core NW apparatus may include information related to a stop of duplication for uplink communication. The information may include information indicating a stop of duplication of data, information indicating a stop of transmission to a plurality of UEs, information related to a transmission target UE after a stop of duplication, or information related to identification of communication using a plurality of paths.

As another example of the information related to the identification, a time stamp may be used. The time stamp may be applied by the base station and/or the core NW apparatus. The device may retain one of data with the same time stamp and delete the other data.

The time stamp may be applied by the device. The device may transmit, to a plurality of UEs, data to which the same time stamp is applied. The base station and/or the core NW apparatus may retain one of data with the same time stamp and delete the other data. For example, this causes management of the above-described sequence number by the device to be unnecessary, and, consequently, complexity in the communication system can be avoided.

The base station may determine whether a plurality of UEs are to be used. For example, the base station may perform the determination by using a result of measurement of received power from the UE.

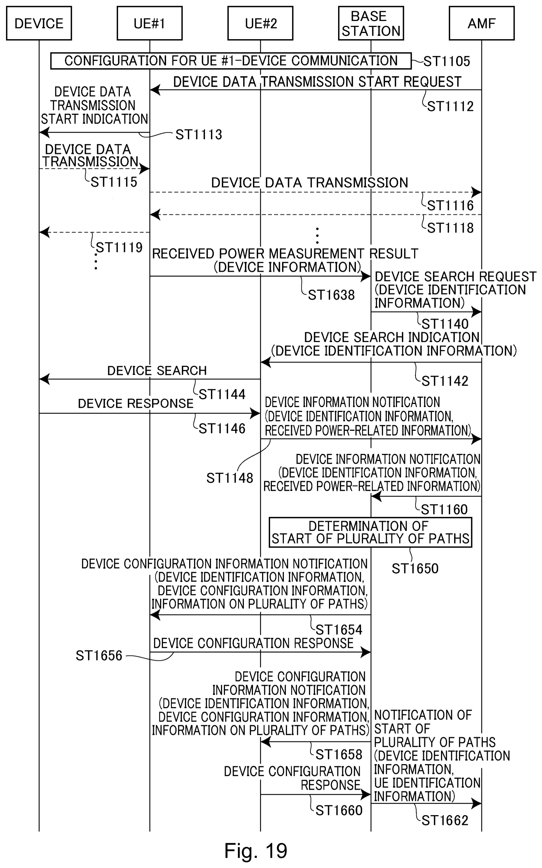

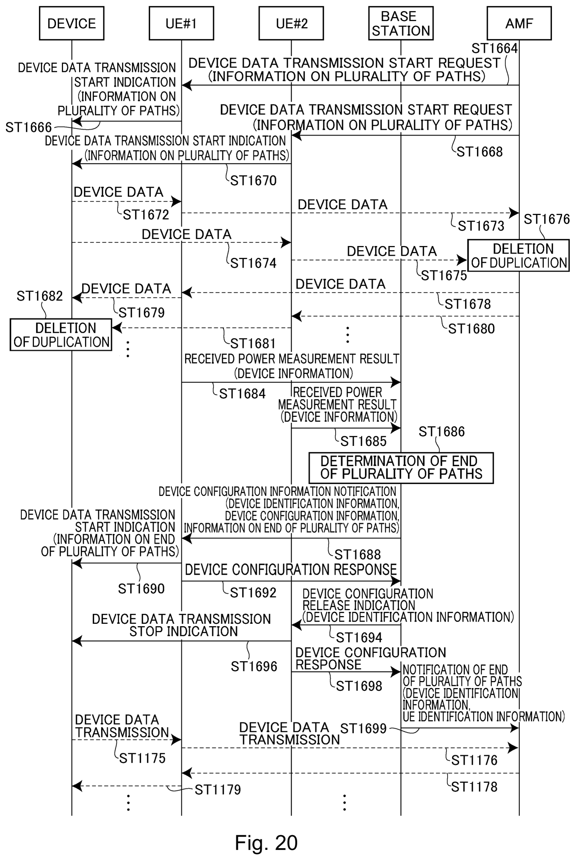

Figs. 19 and 20 are diagrams of a sequence illustrating an example in which communication between the device and the communication network is performed by using a plurality of UEs. Figs. 19 and 20 illustrate the first half and the second half of the sequence, respectively. In the example illustrated in Figs. 19 and 20, the device performs communication by using UE #1 and UE #2, and performs communication subsequently by using only UE #1. In the example illustrated in Figs. 19 and 20, the base station determines whether to perform communication using a plurality of paths. In Figs. 19 and 20, the same step numbers are applied to the same processing as that of Figs. 11 and 12, and the common description thereof is omitted.

Steps ST1105 to ST1119 illustrated in Fig. 19 are the same as those of Fig. 11.

In Step ST1638 illustrated in Fig. 19, UE #1 notifies the base station of information related to a received power measurement result. The notification may include information related to a measurement result of received power of Step ST1115, or may include information related to identification of the device. The notification may use RRC signaling, for example, signaling of a measurement report, may use MAC signaling, or may use L1/L2 signaling.

Steps ST1140 to ST1160 illustrated in Fig. 19 are the same as those of Fig. 11.

In Step ST1650 illustrated in Fig. 19, the base station determines communication with the device using a plurality of paths. In the example illustrated in Figs. 19 and 20, use of UE #1 and UE #2 is determined.

In Step ST1654 illustrated in Fig. 19, the base station notifies UE #1 of information related to a device configuration. The information may include information indicating use of a plurality of paths. UE #1 performs device configuration by using the information received in Step ST1654. In Step ST1656, UE #1 transmits, to the base station, a response to the device configuration.

In Step ST1658 and Step ST1660 illustrated in Fig. 19, the same processing as that of Step ST1654 and Step ST1656 is performed between the base station and UE #2.

In Step ST1662 illustrated in Fig. 19, the base station notifies an AMF of information indicating a start of communication with the device using a plurality of paths. The information may include information related to identification of the device or may include information related to identification of the UE. In the example illustrated in Figs. 19 and 20, as the information related to identification of the UE, identifiers of UE #1 and UE #2 may be included.

In Step ST1664 illustrated in Fig. 20, the AMF requests UE #1 to perform data transmission from the device. The request may include information indicating communication using a plurality of paths. As an example of the information, information related to identification of the UE may be included. The same signaling as that of Step ST1112 in Fig. 11 may be used for Step ST1664. In Step ST1666, UE #1 indicates, to the device, a start of transmission of device data. The request may include information indicating communication using a plurality of paths. As an example of the information, information related to identification of the UE or information related to identification of communication using a plurality of paths may be included. The same signaling as that of Step ST1113 in Fig. 11 may be used for Step ST1666.

In Step ST1668 and Step ST1670 illustrated in Fig. 20, the same processing as that of Step ST1664 and Step ST1666 is performed between the base station and UE #2.

In response to Step ST1666 and/or Step ST1670, the device may start duplication of data to be transmitted to the communication NW or may start operation for detection of duplication of data received from the communication NW. For example, the device may start duplication of the data to be transmitted or may start operation for detection of duplication of the received data, in response to matching of information related to identification of communication using a plurality of paths included in Step ST1666 to the information included in Step ST1670.

In Step ST1672 and Step ST1673 illustrated in Fig. 20, the device transmits data to the AMF via UE #1. Step ST1672 and Step ST1673 indicate data transmission from the device to UE #1 and data transmission from UE #1 to the AMF, respectively.

In Step ST1674 and Step ST1675 illustrated in Fig. 20, the device transmits data to the AMF via UE #2. Step ST1674 and Step ST1675 indicate data transmission from the device to UE #2 and data transmission from UE #2 to the AMF, respectively. The transmitted data in Step ST1674 is the same as that in Step ST1672.

In Step ST1676 illustrated in Fig. 20, the AMF deletes duplicated data. In the example illustrated in Fig. 20, the AMF deletes the subsequently received data of Step ST1675.

In Step ST1678 and Step ST1679 illustrated in Fig. 20, the AMF transmits data to the device via UE #1. Step ST1678 and Step ST1679 indicate data transmission from the AMF to UE #1 and data transmission from UE #1 to the device, respectively.

In Step ST1680 and Step ST1681 illustrated in Fig. 20, the AMF transmits data to the device via UE #2. Step ST1680 and Step ST1681 indicate data transmission from the AMF to UE #2 and data transmission from UE #2 to the device, respectively. The transmitted data in Step ST1680 is the same as that in Step ST1678.

In Step ST1682 illustrated in Fig. 20, the device deletes duplicated data. In the example illustrated in Fig. 20, the device deletes the subsequently received data of Step ST1681.

In Step ST1684 illustrated in Fig. 20, UE #1 notifies the base station of information related to a received power measurement result. The notification may include information related to a measurement result of received power of Step ST1672, or may include information related to identification of the device. The same signaling as that of Step ST1638 may be used for Step ST1684.

In Step ST1685 illustrated in Fig. 20, UE #2 notifies the base station of information related to a received power measurement result. The notification may include information related to a measurement result of received power of Step ST1674, or may include information related to identification of the device. The same signaling as that of Step ST1638 may be used for Step ST1685.

In Step ST1686 illustrated in Fig. 20, the base station determines an end of use of a plurality of paths in communication with the device. The base station may determine that only UE #1 is used for communication with the device.

In Step ST1688 illustrated in Fig. 20, the base station notifies UE #1 of information related to a device configuration. The information may include information indicating an end of use of a plurality of paths. UE #1 performs device configuration by using the information notified in Step ST1688. In Step ST1690, UE #1 indicates, to the device, a start of transmission of device data. The request may include information indicating an end of use of a plurality of paths. As an example of the information, information related to identification of the UE may be included. The device stops duplication of data in response to Step ST1690. In Step ST1692, UE #1 transmits, to the base station, a response to the device configuration.

In Step ST1694 illustrated in Fig. 20, the base station indicates, to UE #2, a release of a device configuration. The indication may use RRC signaling, for example, signaling of RRC reconfiguration, may use MAC signaling, or may use L1/L2 signaling. In Step ST1696, UE #2 indicates, to the device, a stop of transmission of device data. In response to Step ST1696, the device stops data transmission to UE #2. In Step ST1698, UE #2 transmits, to the base station, a response to the device configuration release indication.

In Step ST1699 illustrated in Fig. 20, the base station notifies the AMF of information indicating an end of communication with the device using a plurality of paths. The information may include information related to identification of the device or may include information related to identification of the UE. In the example illustrated in Fig. 20, as the information related to identification of the UE, an identifier of UE #1 may be included. In response to the notification, the AMF stops duplication of data to be transmitted to the device.

Steps ST1175 to ST1179 illustrated in Fig. 20 are the same as those of Fig. 12.

As another example, the core NW apparatus may determine whether a plurality of UEs are to be used. For example, the core NW apparatus may perform the determination by using information related to QoS in communication with the device.

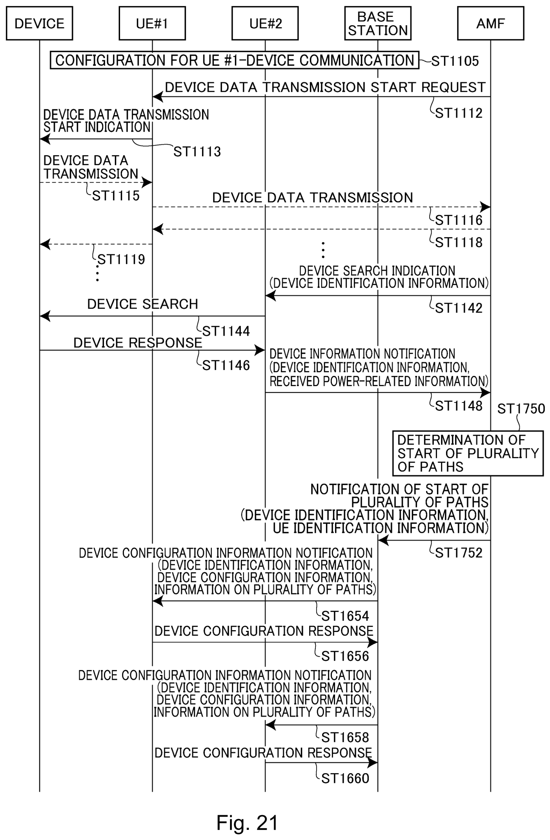

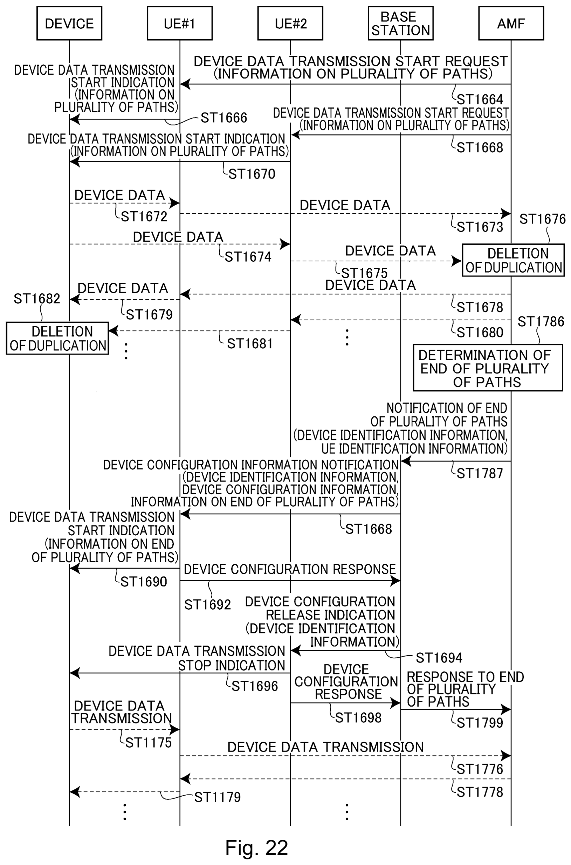

Figs. 21 and 22 are diagrams of a sequence illustrating another example in which communication between the device and the communication network is performed by using a plurality of UEs. Figs. 21 and 22 illustrate the first half and the second half of the sequence, respectively. In the example illustrated in Figs. 21 and 22, the device performs communication by using UE #1 and UE #2, and performs communication subsequently by using only UE #1. In the example illustrated in Figs. 21 and 22, the AMF determines whether or not to perform communication using a plurality of paths. In Figs. 21 and 22, the same step numbers are applied to the same processing as that of Figs. 11, 12, 19, and 20, and the common description thereof is omitted.

Steps ST1105 to ST1148 illustrated in Fig. 21 are the same as those of Fig. 11. The AMF may determine whether Step ST1142 is to be performed, by using information related to QoS of Step ST1116.

In Step ST1750 illustrated in Fig. 21, the AMF determines communication with the device using a plurality of paths. In the example illustrated in Fig. 21, use of UE #1 and UE #2 is determined.

In Step ST1752 illustrated in Fig. 21, the AMF notifies the base station of information indicating a start of communication with the device using a plurality of paths. The information may include information related to identification of the device or may include information related to identification of the UE. In the example illustrated in Fig. 21, as the information related to identification of the UE, identifiers of UE #1 and UE #2 may be included. In response to Step ST1752, the base station may determine device configuration for UE #2.

Steps ST1654 to ST1682 illustrated in Figs. 21 and 22 are the same as those of Figs. 19 and 20.

In Step ST1786 illustrated in Fig. 22, the AMF determines an end of communication with the device using a plurality of paths. In the example illustrated in Fig. 22, the AMF determines use of only UE #1. For example, the AMF may judge whether to perform the determination, by using information related to QoS in ST1673 and/or Step ST1675.

In Step ST1787 illustrated in Fig. 22, the AMF notifies the base station of information indicating an end of communication with the device using a plurality of paths. The information may include information related to identification of the device or may include information related to identification of the UE. In the example illustrated in Fig. 22, as the information related to identification of the UE, an identifier of UE #1 may be included. In response to Step ST1787, the base station performs processing for the end of the communication with the device using the plurality of paths.

Steps ST1688 to ST1698 illustrated in Fig. 22 are the same as those of Fig. 20.

In Step ST1799 illustrated in Fig. 22, the base station transmits, to the AMF, a response to Step ST1787.

Steps ST1175 to ST1179 illustrated in Fig. 22 are the same as those of Fig. 12.

Both of the core NW apparatus and the base station may determine whether a plurality of UEs are to be used. This enables, for example, flexibility in the communication system to be enhanced.

One piece of data transmitted by the base station and/or the core NW apparatus may be received by a plurality of UEs. The plurality of UEs may transmit the piece of data to the device. The device may receive data from the plurality of UEs. The device may detect duplication of the data received from the plurality of UEs or may delete received duplicated data. This can, for example, enhance resource use efficiency in the communication system while securing reliability of communication from the communication network to a device.

A plurality of UEs may receive data transmitted by the device. The plurality of UEs may transmit the data to the base station and/or the core NW apparatus. The base station and/or the core NW apparatus may receive data from the plurality of UEs. The base station and/or the core NW apparatus may detect duplication of the data received from the plurality of UEs or may delete received duplicated data. This can, for example, enhance resource use efficiency in the communication system while securing reliability of communication from a device to the communication network.

Multicast may be used for communication with the device using a plurality of UEs. For example, multicast may be used for transmission from the base station and/or the core NW apparatus to a UE. Multicast configuration, which is transmitted from the base station and/or the core NW apparatus to a UE, may include information related to communication with the device. By using the information, the UE may transmit multicast data to the device. This enables, for example, complexity in the communication system to be avoided.

Data transmission from the base station and/or the core NW apparatus to a UE may include information used for deletion of duplication. The information used for the deletion of duplication may be, for example, the information related to data identification disclosed above. This enables, for example, the device to detect duplication of data.

As another example, multicast may be used for transmission from the device to a UE. Multicast configuration, which is transmitted from the base station and/or the core NW apparatus to a UE, may include information related to communication with the device. By using the information, the UE may transmit multicast data to the device. This enables, for example, complexity in the communication system to be avoided.

Data transmission from the device to a UE may include information used for deletion of duplication. The information used for the deletion of duplication may be, for example, the information related to data identification disclosed above. This enables, for example, the base station and/or the core NW apparatus to detect duplication of data.

The base station may indicate, to one or a plurality of UEs, transmission from the device. The one or plurality of UEs may indicate, to the device, data transmission. The base station may indicate, to one or a plurality of UEs other than the above-described UE(s), reception of data transmitted from the device. The indication of the data reception may include information related to a time/frequency resource related to the reception or may include information related to the device. For the indication of the data reception, new DCI may be provided and used. In response to the indication, the UE may receive data from the device.

According to the third embodiment, reliability of communication between a device and the communication network can be enhanced.

### Fourth Embodiment

A UE to which a device is connected may be switched. The switching may be performed, for example, in a case where a core NW apparatus is a host.

Switching of the UE may be determined by a base station. The base station may perform the determination by using information related to a result of measurement, in the UE, of a signal from the device.

The UE may notify the base station of the information. As examples of the information notified from the UE to the base station, (1) to (11) will be disclosed below.
(1) Information related to identification of device.
(2) Information related to a power measurement result.
(3) Information related to a reception error rate.
(4) Information related to a time point of power measurement.
(5) Information related to a location of a UE.
(6) Information related to a location of a device.
(7) Information related to area identification.
(8) Information related to a time point of location measurement.
(9) Information related to a resource used for communication with a device.
(10) Information related to reception latency.
(11) Combinations of (1) to (10) described above.

As examples of the information of (2) described above, (2-1) to (2-6) will be disclosed below.
(2-1) Information related to power of a signal received from the device by the UE.
(2-2) Information related to a path loss between the UE and the device.
(2-3) Information related to power of a signal transmitted to the device by the UE.
(2-4) Information related to a ratio between power of a signal transmitted to the device by the UE and power of a signal received from the device by the UE.
(2-5) Information related to an SINR.
(2-6) Combinations of (2-1) to (2-5) described above.

As another example, the UE may notify the core NW apparatus of information related to a measurement result of a signal from the device. The core NW apparatus may notify the base station of the information. The base station may perform the above-described determination by using the information. The information notified to the core NW apparatus by the UE may be the same as (1) to (11) described above.

As another example, the UE may notify the core NW apparatus and the base station of information related to a measurement result of a signal from the device. For example, the UE may notify the base station of the information of (1) and/or (2) described above, or may notify the core NW apparatus of the information of (1), (3) to (11) described above. The core NW apparatus may notify the base station of the information of (1), (3) to (11) described above. This enables, for example, complexity of design related to signaling from the UE to the base station to be avoided.

The base station may request the core NW apparatus to perform a device search. The core NW apparatus may determine, by using the request, a UE to which a device search is to be indicated. The request may include the information of (1) to (11) described above. For example, the information of (6) described above is included, thereby enabling the core NW apparatus to promptly determine a UE to which a device search is to be indicated.

The request from the base station to the core NW apparatus may include information related to power used for a device search. This enables, for example, the core NW apparatus to indicate, to a UE, power used for a device search.

The core NW apparatus may indicate a device search to a UE. The core NW apparatus may perform the indication to a plurality of UEs. The UE as a target of the indication may or may not include a target UE to which a device is connected. The core NW apparatus may perform the indication in response to notification from the above-described UE, or may perform the indication to another UE in advance. The indication may use signaling between the core NW apparatus and the UE, for example, NAS signaling. In response to the indication from the core NW apparatus, the UE may search a device or may measure received power from a device.

As information included in the indication from the core NW apparatus to such another UE, (A) to (D) will be disclosed below.
(A) Information related to identification of a device.
(B) Information related to a resource used for communication with a device.
(C) Information related to transmission power.
(D) Combinations of (A) to (C) described above.

The UE may notify the core NW apparatus of a result of a search for a device. The notification may include information related to the device, for example, information related to the presence or absence of the device, or may include the information of (1) to (11) described above. The core NW apparatus may notify the base station of information related to a result of a device search. The information for the base station from the core NW apparatus may include the information of (1) to (11) described above.

The base station determines a switching target UE. The base station may perform the determination by using the information notified from the core NW apparatus.

The base station may request a switching source UE to notify a device configuration. The request may include information related to a device related to UE switching, for example, information related to identification of the device. The request may be performed by using RRC signaling, for example, RRC reconfiguration, by using MAC signaling, or by using L1/L2 signaling.

The switching source UE may notify the base station of a device configuration. The notification may include information related to identification of the device. The notification from the switching source UE to the base station may be performed in response to the request from the base station to the switching target UE. The notification may be performed by using RRC signaling, for example, RRC reconfiguration completion, by using MAC signaling, or by using L1/L2 signaling.

The device configuration may include information related to identification of the device, may include information related to a device location, may include information related to a UE, or may include information related to a UE location. The information related to a time point may include information related to a time point of device data acquisition. The information related to a device location and/or the information related to a UE location may include, for example, information related to a location in device data acquisition. The device configuration may include information related to a configuration of communication between the UE and the base station, may include information related to a resource (for example, time, frequency, power, beam) used for communication between the UE and the base station, or may include information related to scheduling between the UE and the device. The device configuration may include information related to a configuration of communication between the UE and the core NW apparatus. The device configuration may include information related to a configuration of communication between the device and the base station or may include information related to a configuration of communication between the device and the core NW apparatus.

The request from the base station to the switching source UE may include a request for transmission of data related to the device. The switching source UE may transmit the data to the base station. The transmission of the data from the switching source UE may be performed, for example, in response to the request for transmission of data related to the device from the base station to the switching source UE.

The base station may notify the switching target UE of information related to a device configuration. The notification may include information related to identification of the device. The switching target UE may perform device configuration by using the notification. The switching target UE may notify the base station of a response to the notification.

The base station may notify the core NW apparatus, for example, an AMF, of switching of a target UE to which the device is to be connected. The notification may include information related to identification of the device or may include information related to a UE, for example, information related to identification of a UE. The UE may be, for example, a UE after the switching. The core NW apparatus may transmit, to the base station, a response to the notification of the switching. By using the information, the core NW apparatus may transmit data to a target UE to which the device is to be connected, or may receive data from the UE.

The UE may stop data transmission to the device. The stop in the UE may be performed in response to notification of information related to a measurement result of a signal from the device, in response to a request for notification of a device configuration from the base station to the UE, or in response to device configuration release indication from the base station to the UE. The UE may hold data received from the core NW apparatus.

Data transmission from the device to the UE may be stopped. The UE may indicate, to the device, a stop of data transmission. The stop may be performed in response to notification of information related to a measurement result of a signal from the device, in response to a request for notification of a device configuration from the base station to the UE, or in response to device configuration release indication from the base station to the UE.

As another example of the stop of the data transmission from the device to the UE, the device may stop data transmission to the UE in response to receiving a device search signal from another UE, in response to transmitting a response to a device search signal to another UE, or in response to receiving a device data transmission start indication from another UE.

The switching source UE may forward, to the base station, data to be transmitted to the device. The data forwarded by the switching source UE may be the above-described data held by the UE. The forwarding by the switching source UE may be performed in response to notification of information related to a measurement result of a signal from the device, in response to a request for notification of a device configuration from the base station to the UE, or in response to device configuration release indication from the base station to the UE. The base station may hold the data.

The base station may forward, to the switching target UE, data to be transmitted to the device. The data forwarded by the base station may be the above-described data held by the base station. The forwarding by the base station may be performed in response to forwarding of the data from the switching source UE to the base station or in response to a response from the switching target UE to notification of a device configuration from the base station to the switching target UE. The switching target UE may hold the data. The switching target UE may transmit the data to the device.

As another example, the switching source UE may forward, to the core NW apparatus, data to be transmitted to the device. The forwarding may be performed via the base station. The core NW apparatus may forward the data to the switching target UE. The forwarding from the core NW apparatus to the switching target UE may be performed via the base station.

As another example, the switching source UE may notify the base station and/or the core NW apparatus of information related to data to be transmitted to the device. The information may be, for example, the information related to the identification, the sequence number, or the time stamp disclosed in the third embodiment. The base station and/or the core NW apparatus may transmit, to the switching target UE, data to be transmitted to the device. The base station and/or the core NW apparatus may perform the transmission by using the above-described information. This can, for example, enhance efficiency of communication between the switching source UE and the base station and/or the core NW apparatus.

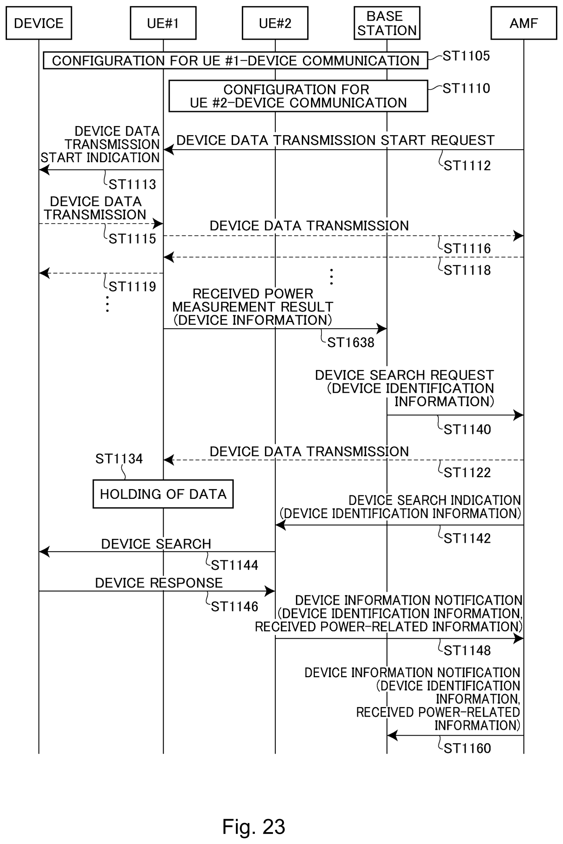

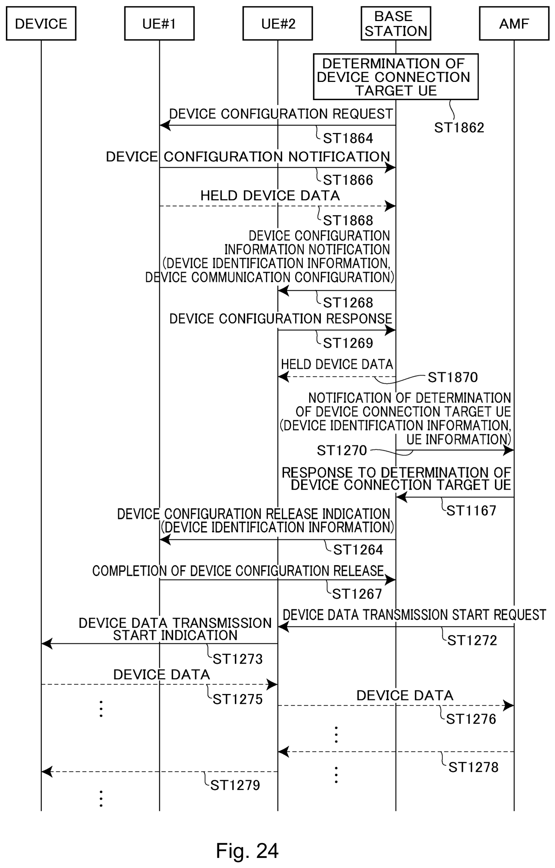

Figs. 23 and 24 are diagrams of a sequence illustrating an example of operation for switching of a device connection target UE and a connection target base station related to communication between the UE and the device. Figs. 23 and 24 illustrate the first half and the second half of the sequence, respectively. The example illustrated in Figs. 23 and 24 illustrates a case where the device connection target UE is switched from UE #1 to UE #2. UE #1 and UE #2 become the switching source UE and the switching target UE, respectively. Figs. 23 and 24 illustrate a case where a host for the device is the AMF. The example illustrated in Figs. 23 and 24 illustrates a case where the base station determines switching of the device connection target UE. In Figs. 23 and 24, the same step numbers are applied to the same processing as that of Figs. 11, 12, 13, and 14, and the common description thereof is omitted.

In Fig. 23, UE #1 may stop data transmission to the device in response to Step ST1638. In Step ST1134, UE #1 holds data for the device indicated by Step ST1122.

In Step ST1862 in Fig. 24, the base station determines switching of the device connection target UE. In Step ST1864, the base station requests UE #1 to notify a device configuration. In Step ST1866, UE #1 notifies the base station of a device configuration.

In Step ST1868 in Fig. 24, the switching source UE forwards, to the base station, data scheduled to be transmitted to the device. The base station holds the data. In Step ST1870, the base station forwards the data to the switching target UE. Data transmitted by the switching target UE to the device in Step ST1279 may include data forwarded from the switching source UE to the switching target UE via the base station. The forwarding may be performed via the AMF.

Figs. 23 and 24 illustrate the example in which UE #1 stops data transmission to the device in response to Step ST1638, but UE #1 may stop data transmission to the device in response to device configuration release indication indicated by Step ST1264. This can, for example, shorten time to stop data transmission from the UE to the device.

In the example illustrated in Figs. 23 and 24, the device may stop data transmission to UE #1 in response to receiving a device search signal from UE #2 indicated by Step ST1144, in response to transmitting a response to a device search signal to UE #2 indicated by Step ST1146, or in response to receiving a device data transmission start indication from UE #2 indicated by Step ST1273.

As another example, the stop of the data transmission from the device to UE #1 may be performed in response to notification of a received power measurement result indicated by Step ST1638, in response to a device configuration request from the base station to UE #1 indicated by Step ST1864, or in response to device configuration release indication from the base station to UE #1 indicated by Step ST1264. In response to the foregoing, UE #1 may indicate, to the device, a stop of data transmission.

Another solution will be disclosed. Switching of the UE may be determined by a core NW apparatus. The core NW apparatus may be, for example, an AMF or a UPF, or may be provided with an entity related to inter-device communication that performs the determination. The core NW apparatus may determine the switching of the UE, for example, by using information related to QoS in communication with the device. The information related to QoS may be, for example, a packet loss rate or latency of received data. As another example of the determination, the core NW apparatus may perform the determination by using information related to received power, in the UE, of a signal from the device or by using both of the foregoing. The UE may notify the core NW apparatus of the information related to the received power. The notification may include, for example, information related to identification of the device.

The core NW apparatus may notify the base station of switching of the device connection target UE. The notification may include information related to identification of the device or may include information related to a UE, for example, information related to identification of a UE. The base station may perform, in response to the notification, processing for switching of the UE. The UE switching processing performed by the base station may be similar to the foregoing.

The base station may transmit, to the core NW apparatus, a response to the notification of the switching of the device connection target UE. In response to the notification, the core NW apparatus may recognize completion of the switching of the UE.

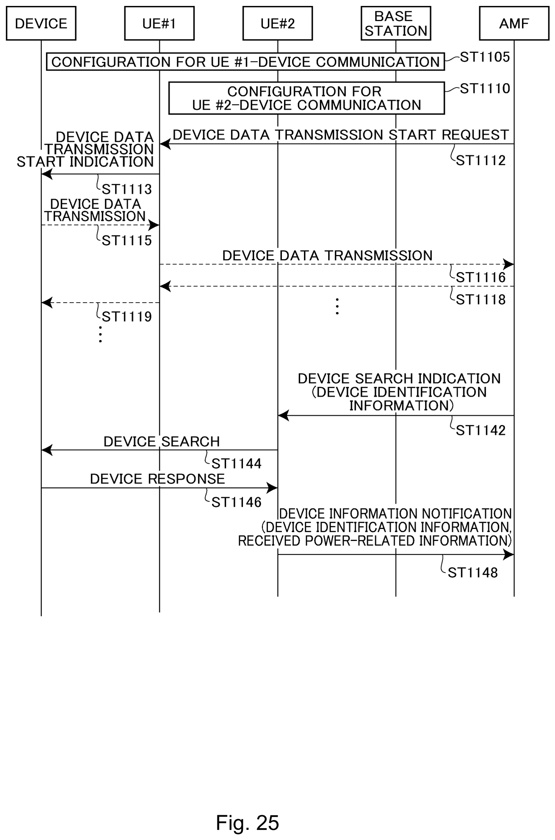

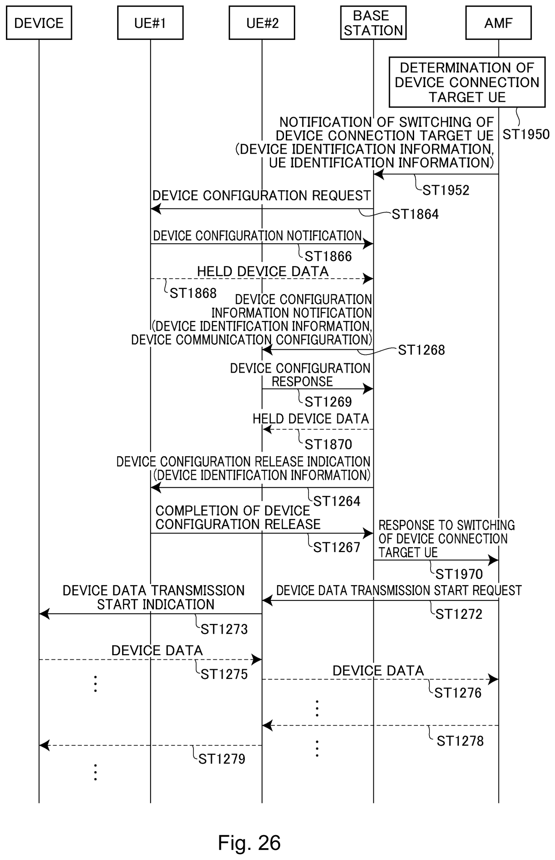

Figs. 25 and 26 are diagrams of a sequence illustrating another example of the operation for switching of the device connection target UE and the connection target base station related to communication between the UE and the device. Figs. 25 and 26 illustrate the first half and the second half of the sequence, respectively. The example illustrated in Figs. 25 and 26 illustrates a case where the device connection target UE is switched from UE #1 to UE #2. UE #1 and UE #2 become the switching source UE and the switching target UE, respectively. Figs. 25 and 26 illustrate a case where a host for the device is the AMF. The example illustrated in Figs. 25 and 26 illustrates a case where the AMF determines switching of the device connection target UE. In Figs. 25 and 26, the same step numbers are applied to the same processing as that of Figs. 11, 12, 13, 14, 23, and 24, and the common description thereof is omitted.

In Step ST1950 in Fig. 26, the AMF determines switching of the device connection target UE. In Step ST1952, the AMF notifies the base station of switching of the device connection target UE.

In Step ST1970 in Fig. 26, the base station transmits, to the AMF, a response to the switching of the device connection target UE.

According to the fourth embodiment, processing for switching of the UE to which the device is connected can be performed, and, consequently, communication between the UE and the core NW apparatus can be continued.

### Fifth Embodiment

Processing will be disclosed in which a switching target of a UE to which a device is connected is a UE connected to a different base station.

A base station to which a switching source UE is connected (sometimes referred to hereinafter as a switching source base station) determines switching of the UE and/or the base station. This enables communication to be continued by switching, when the device moves, a connection target to a UE under control of a base station different from the switching source base station.

A device search request from the switching source base station to a core NW apparatus, device search indication from the core NW apparatus to the UE, notification of a device search result from the UE to the core NW apparatus, notification of a device search result from the core NW apparatus to the switching source base station, and a device configuration request from the switching source base station to the switching source UE may be performed in a manner similar to that of the fourth embodiment.

The switching source base station may request a switching target base station to switch the UE to which the device is connected. The request may use, for example, signaling of a mobility request. The switching target base station may notify the switching target UE of information related to a device configuration. The switching target UE may transmit, to the switching target base station, a response to the notification.

The switching source base station may notify the core NW apparatus of switching of a target UE to which the device is to be connected. The notification may include information related to identification of the device, may include information related to a UE, for example, information related to identification of a UE, or may include information related to a base station, for example, information related to a switching target base station. The UE may be, for example, a switching target UE. The core NW apparatus may transmit, to the switching source base station, a response to the notification of the switching. By using the information, the core NW apparatus may transmit data to the target UE to which the device is to be connected, or may receive data from the UE.

A stop of data transmission to the device and holding of the data in the switching source UE may be performed in a manner similar to that of the fourth embodiment.

The switching source UE may forward, to the switching source base station, data to be transmitted to the device. The forwarding by the switching source UE may be performed in a manner similar to that of the fourth embodiment.

The switching source base station may forward, to the switching target base station, data to be transmitted to the device. The data forwarded by the switching source base station may be the above-described data held by the base station. The forwarding by the switching source base station may be performed in response to forwarding of the data from the switching source UE to the switching source base station. The switching target base station may hold the data. The forwarding may be performed via the core NW apparatus.

The switching target base station may forward, to the switching target UE, data to be transmitted to the device. The data forwarded by the switching target base station may be the above-described data held by the base station. The forwarding by the switching target base station may be performed in a manner similar to that of the fourth embodiment. The switching target UE may transmit the data to the device.

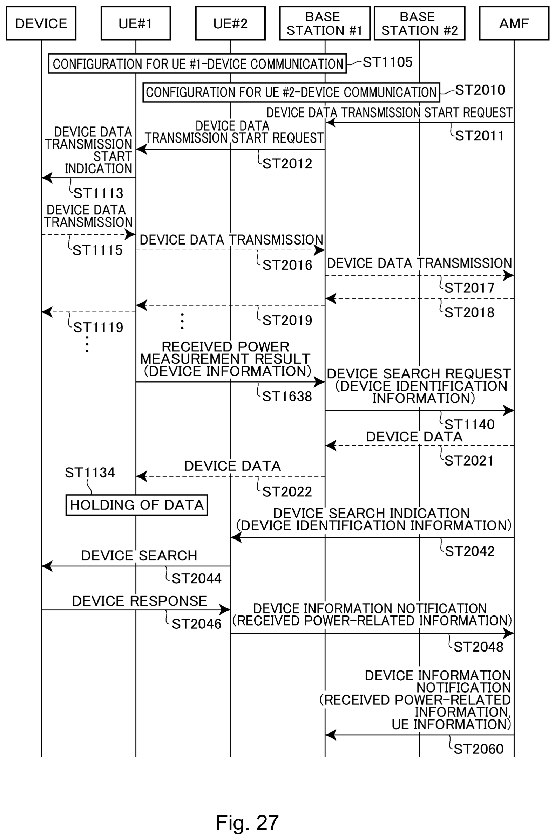

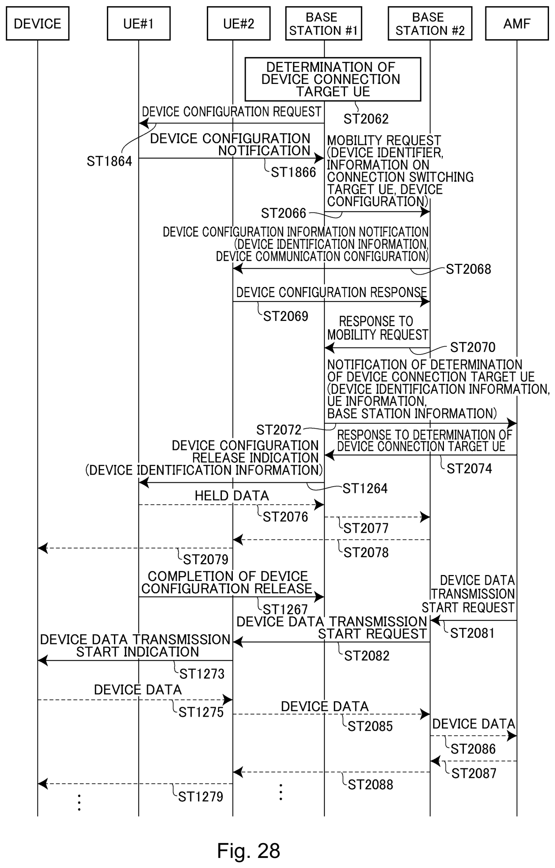

Figs. 27 and 28 are diagrams of a sequence illustrating an example of operation for switching of a device connection target UE and a connection target base station related to communication between the UE and the device. Figs. 27 and 28 illustrate the first half and the second half of the sequence, respectively. The example illustrated in Figs. 27 and 28 illustrates a case where an AMF is used as the core NW apparatus. In the example illustrated in Figs. 27 and 28, UE #1 connected to base station #1 is the switching source UE, UE #2 connected to base station #2 is the switching target UE, base station #1 is the switching source base station, and base station #2 is the switching target base station. The example in Figs. 27 and 28 illustrates a case where the switching source base station determines the switching target UE. In Figs. 27 and 28, the same step numbers are applied to the same processing as that of Figs. 11, 12, 23, and 24, and the common description thereof is omitted.

In Step ST2010 illustrated in Fig. 27, the same processing as that of Step ST1105 is performed between base station #2 and UE #2.

In Step ST2011 and Step ST2012 illustrated in Fig. 27, the same processing as that of Step ST1112 in Fig. 11 is performed. Hereinafter, Step ST2016 and Step ST2017 are the same as Step ST1116 in Fig. 11. Step ST2018 and Step ST2019 are the same as Step ST1118 in Fig. 11. Step ST2021 and Step ST2022 are the same as Step ST1122 in Fig. 23. In Step ST2042 and Step ST2048, the same processing as that of Step ST1142 and Step ST1148 in Fig. 23 is performed between the AMF and UE #2. In Step ST2044 and Step ST2046, the same processing as that of Step ST1144 and Step ST1146 in Fig. 23 is performed between UE #2 and the device. In Step ST2060, the same processing as that of Step ST1160 in Fig. 23 is performed between the AMF and base station #1.

In Step ST2062 illustrated in Fig. 28, base station #1 determines switching of the UE to which the device is connected. In the example illustrated in Fig. 28, base station #1 determines that the UE to which the device is to be connected is UE #2.

In Step ST2066 illustrated in Fig. 28, base station #1 requests base station #2 to switch the UE to which the device is connected. The request may use, for example, signaling of a mobility request. The request may include a device identifier, may include information related to a switching target UE, or may include information related to a device configuration. In Step ST2068 and Step ST2069, the same processing as that of Step ST1268 and Step ST1269 in Fig. 24 is performed between base station #2 and UE #2. In Step ST2070, base station #2 transmits, to base station #1, a response to Step ST2066.

In Step ST2072 illustrated in Fig. 28, base station #1 notifies the AMF of switching of the target UE to which the device is to be connected. The notification may include information related to identification of the device, may include information related to a UE, for example, information related to identification of a UE, or may include information related to a base station, for example, information related to a switching target base station. In Step ST2074, the AMF transmits, to base station #1, a response to Step ST2072.

In Step ST2076 illustrated in Fig. 28, UE #1 transmits, to base station #1, data for the device. The data may be, for example, the data held in Step ST1134. In Step ST2077, base station #1 forwards the data of Step ST2076 to base station #2. In Step ST2078, base station #2 forwards the data of Step ST2077 to UE #2. In Step ST2079, UE #2 forwards the data of Step ST2078 to the device.

In Step ST2081 and Step ST2082 illustrated in Fig. 28, the same processing as that of Step ST1272 in Fig. 14 is performed. In Step ST2085 and Step ST2086, the same processing as that of Step ST1276 in Fig. 14 is performed. In Step ST2087 and Step ST2088, the same processing as that of Step ST1278 in Fig. 14 is performed.

Another solution will be disclosed. The switching source base station may determine a switching target base station. The switching source base station may notify the switching target base station of information related to device switching. The notification may include information related to a measurement result of a device, may include information related to a UE that has performed the measurement, may include information related to a device, may include information related to a device configuration, or may include a request related to determination of a target UE to which the device is to be connected. As another example, the switching source base station may request the switching target base station to switch the UE to which the device is connected. The request may include, for example, the same information as the information included in the above-described notification.

The switching target base station may determine a switching target UE. The switching target base station may determine the switching target UE by using information included in the notification and/or the request from the switching source base station.

The switching target base station may notify the core NW apparatus of switching of the target UE to which the device is to be connected. The notification may include information related to identification of the device, may include information related to a UE, for example, information related to identification of a UE, or may notify information related to a base station, for example, information related to a switching target base station. The UE may be, for example, a switching target UE. The core NW apparatus may transmit, to the switching target base station, a response to the notification of the switching. By using the information, the core NW apparatus may transmit data to a device connection target UE or may receive data from the UE.

As another example, the switching source base station may notify the core NW apparatus of information related to switching of the device connection target. The information may include information related to a switching target base station, may include information related to a measurement result of a device, may include information related to a UE that has performed the measurement, may include information related to a device, or may include information related to a device configuration. This enables, for example, the core NW apparatus to promptly recognize switching of a UE connected to a device.

The core NW apparatus may notify the switching target base station of information related to switching of the device connection target. The notification may include the same information as that of the notification from the switching source base station to the core NW apparatus.

The switching target base station may determine a switching target UE. The switching target base station may determine the switching target UE by using the notification from the core NW apparatus.

The switching target base station may notify the core NW apparatus of switching of the target UE to which the device is to be connected. The notification may be performed, for example, in the same manner as that of the foregoing.

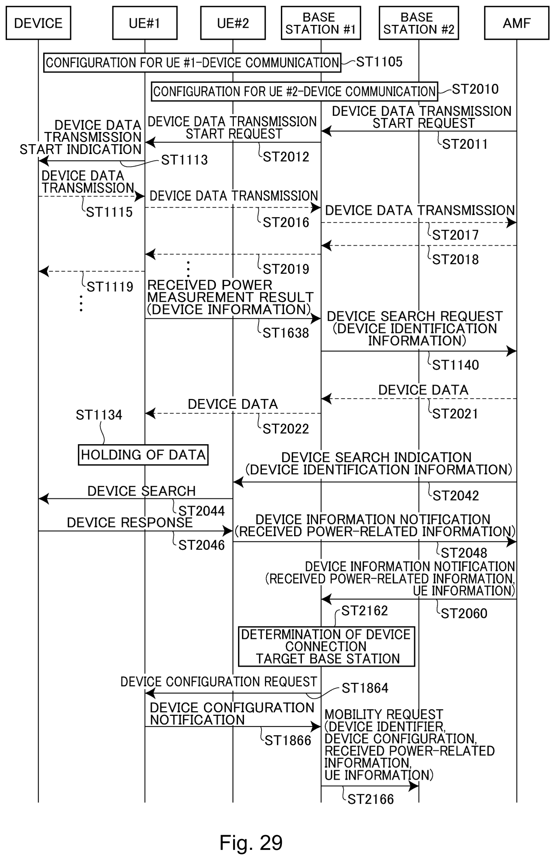

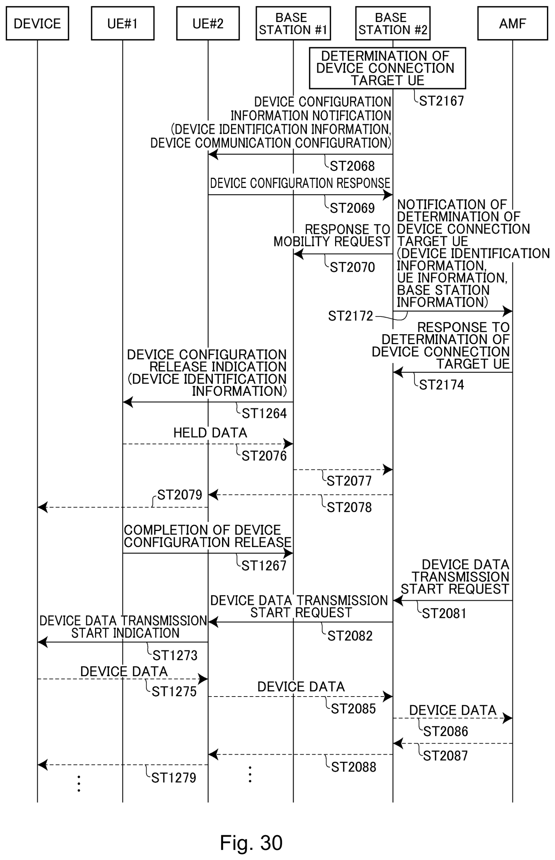

Figs. 29 and 30 are diagrams of a sequence illustrating another example of the operation for switching of the device connection target UE and the connection target base station related to communication between the UE and the device. Figs. 29 and 30 illustrate the first half and the second half of the sequence, respectively. The example illustrated in Figs. 29 and 30 illustrates a case where an AMF is used as the core NW apparatus. In the example illustrated in Figs. 29 and 30, UE #1 connected to base station #1 is the switching source UE, UE #2 connected to base station #2 is the switching target UE, base station #1 is the switching source base station, and base station #2 is the switching target base station. The example in Figs. 29 and 30 illustrates a case where the switching target base station determines the switching target UE. In Figs. 29 and 30, the same step numbers are applied to the same processing as that of Figs. 11, 12, 23, 24, 27, and 28, and the common description thereof is omitted.

In Step ST2162 illustrated in Fig. 29, base station #1 determines switching of a connection target base station for the UE to which the device is connected. In the example illustrated in Fig. 29, base station #1 determines that the connection target base station for the UE to which the device is connected is base station #2.

In Step ST2166 illustrated in Fig. 29, base station #1 requests base station #2 to switch the UE to which the device is connected. The request may use, for example, signaling of a mobility request. The request may include information related to a measurement result of a device, may include information related to a UE that has performed the measurement, may include information related to a device, or may include information related to a device configuration. In Step ST2167 illustrated in Fig. 30, base station #2 determines the switching target UE. In the example illustrated in Fig. 30, base station #2 determines that the UE to which the device is to be connected is UE #2.

In Step ST2172 and Step ST2174 illustrated in Fig. 30, the same processing as that of Step ST2072 and Step ST2074 in Fig. 28 is performed between base station #2 and the AMF.

A combination of the fourth embodiment and the fifth embodiment may be used. For example, device search indication from the core NW apparatus may be performed to a UE present in coverage of the same base station as that for a switching source UE, prior to the indication to a UE present in coverage of a base station different from that for the switching source UE. The core NW apparatus may transmit a device search indication to the UE present in coverage of the base station different from that for the switching source UE, in response to the UE present in coverage of the base station failing to find the device. This can, for example, suppress the number of times of switching of a base station to which a device is connected, and, consequently, the amount of signaling in the communication system can be reduced.

As another example of the combination of the fourth embodiment and the fifth embodiment, device search indication from the core NW apparatus may be performed in parallel to a UE present in coverage of the same base station as that for a switching source UE, and a UE present in coverage of a base station different from that for the switching source UE. This enables, for example, the communication network to promptly search a device, and, consequently, switching of a UE to which a device is connected can be promptly performed.

According to the fifth embodiment, processing for switching to a UE connected to a different base station can be performed for switching of a UE to which a device is connected, and, consequently, communication between the UE and the core NW apparatus can be continued.

### Sixth Embodiment

A UE to which a device is connected may handover to a different base station. In the present embodiment, a connection target base station before movement of the UE and a connection target base station after a change of a connection target of the UE caused by the movement are referred to as a movement source base station and a movement target base station, respectively.

In the present embodiment for solving the problem, a handover request from the movement source base station to the movement target base station includes information related to the device. The information related to the device may include information related to identification of the device (for example, a device identifier) or may include a configuration used for communication between the UE and the device.

A handover request response (for example, a handover request acknowledgement) from the movement target base station to the movement source base station may include information related to the device or may include a configuration used for communication between the UE and the device. The movement target base station may determine the configuration included in the response. The configuration included in the response may be different from the configuration included in the handover request from the movement source base station.

A handover command from the movement source base station to the UE may include a configuration used for communication between the UE and the device. The configuration included in the command may be the configuration determined by the movement target base station.

In response to the handover command, the UE may stop device data transmission and reception to and from the movement source base station. The UE may continue communication with the device. In response to the command, the UE may hold data received from the device. The UE may start device data transmission and reception to and from the movement target base station in response to a start of connection to the movement target base station, for example, completion of random access processing with the movement target base station, or in response to notification of completion of handover to the movement target base station. The UE may transmit the held data to the movement target base station.

In response to the handover command, the UE may stop data transmission and reception to and from the device. The UE may resume data transmission and reception to and from the device in response to completion of connection to the movement target base station, for example, completion of random access processing, in response to transmission of handover completion notification from the UE to the movement target base station, or in response to a device data transmission start request transmitted via the movement target base station.

As another example, the UE may continue data transmission and reception to and from the device. The UE may hold data received from the device. The UE may transmit the held data to the movement target base station in response to completion of connection to the movement target base station, for example, completion of random access processing, or in response to transmission of handover completion notification from the UE to the movement target base station.

In response to the handover command, the UE may switch a configuration used for communication with the device. For example, the UE may switch, to the device configuration included in the handover command, a configuration used for communication with the device. As another example, the UE may switch a configuration used for communication with the device, in response to a device data transmission start request notified via the movement target base station.

The movement target base station may request the core NW apparatus to switch a communication path to the device. The request may include information related to the device or may include information related to the UE. In response to the request, the core NW apparatus may start communication with the device via a UE after the handover.

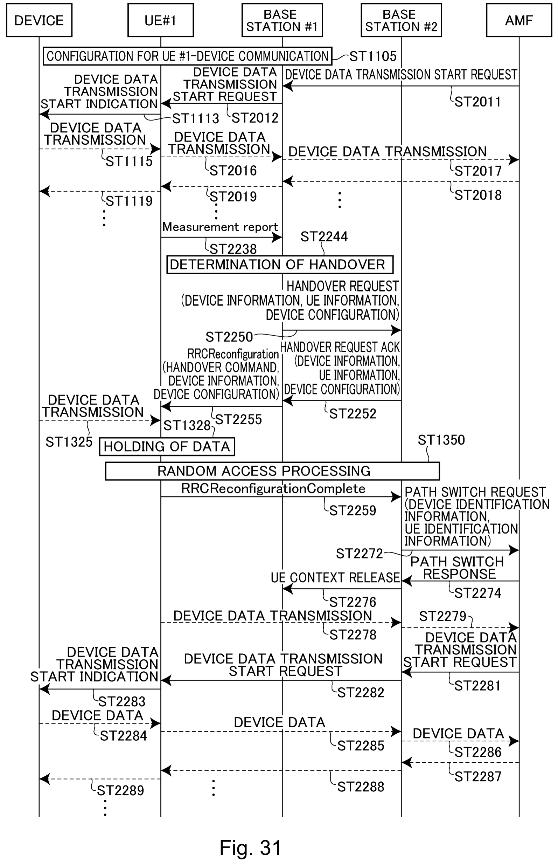

Fig. 31 is a sequence diagram illustrating an example of UE handover operation related to communication between the UE and the device. The example illustrated in Fig. 31 illustrates a case where a connection target base station of UE #1 is switched from base station #1 to base station #2. In Fig. 31, the same step numbers are applied to the same processing as that of Figs. 11, 12, 15, 27, and 28, and the common description thereof is omitted.

In Step ST2238 illustrated in Fig. 31, UE #1 performs a measurement report to base station #1. Note that although not described in Fig. 31, UE #1 performs, at a certain timing, measurement for acquiring information (for example, received power) used for determination of switching of a connection target base station and the like. UE #1 notifies a result of the measurement in the measurement report of Step ST2238. In Step ST2244, base station #1 determines handover of UE #1 to base station #2. Base station #1 may perform the determination, based on the measurement result notified in the measurement report of Step ST2238.

In Step ST2250 illustrated in Fig. 31, base station #1 notifies base station #2 of a handover request. The request in Step ST2250 includes information related to the device. The information related to the device may include information related to identification of the device (for example, a device identifier) or may include a configuration used for communication between UE #1 and the device.

In Step ST2252 illustrated in Fig. 31, base station #2 notifies base station #1 of a handover request. In the example illustrated in Fig. 31, Step ST2252 corresponds to a handover request acknowledgement. The acknowledgement in Step ST2252 may include information related to the device or may include a configuration used for communication between UE #1 and the device.

In Step ST2255 illustrated in Fig. 31, base station #1 transmits a handover command to UE #1. The command may be transmitted, for example, by using signaling of RRC reconfiguration (RRCReconfiguration). The command may include a configuration used for communication between UE #1 and the device. The configuration included in the command may be the configuration determined by base station #2. UE #1 starts handover processing in response to Step ST2255. In response to Step ST2255, the UE may stop device data transmission and reception to and from base station #1. The UE may continue communication with the device. In Step ST1328, the UE may hold data received from the device.

In Step ST2259 illustrated in Fig. 31, UE #1 notifies base station #2 of a response to the handover command. The notification of the response may use RRC signaling, for example, signaling of RRC reconfiguration completion (RRCReconfigurationComplete).

In Step ST2272 illustrated in Fig. 31, base station #2 requests the AMF to switch a communication path to the device. The request may include information related to the device or may include information related to UE #1. In Step ST2274, the AMF transmits, to base station #2, a response to Step ST2272.

In Step ST2278 illustrated in Fig. 31, UE #1 transmits the held data to base station #2. The data may be, for example, the data of Step ST1325. In Step ST2279, base station #2 forwards the data of Step ST2278 to the AMF.

In Steps ST2281, ST2282, and ST2283 illustrated in Fig. 31, the same processing as that of Steps ST2081, ST2082, and ST1273 in Fig. 28 is performed. In Steps ST2284, ST2285, and ST2286, the same processing as that of Steps ST1275, ST2085, and ST2086 in Fig. 28 is performed. In Steps ST2287, ST2288, and ST2289, the same processing as that of Steps ST2087, ST2088, and ST1279 in Fig. 28 is performed.

The example illustrated in Fig. 31 illustrates the case where the device data transmission indicated by Step ST2278 and Step ST2279 is performed after Step ST2276, but the transmission may be performed after Step ST2259. This enables, for example, device data to be promptly transmitted.

As another example related to Fig. 31, the device data transmission indicated by Step ST2278 may be included in the signaling of Step ST2259, and the device data transmission indicated by Step ST2279 may be included in the signaling of Step ST2272. This enables, for example, device data to be promptly transmitted.

Fig. 31 illustrates the example in which the UE performs device data transmission start indication to the device in Step ST2283, but the UE may not perform Step ST2283. This can, for example, reduce signaling between the UE and the device.

The method disclosed in the sixth embodiment may be used for inter-DU handover. For example, signaling of a UE context setup request from a CU to a movement target DU may include information related to the device or may include information related to a configuration used for communication between the UE and the device. Signaling of a UE context release request from the CU to a movement source DU may include information related to the device or may include a device context. This can, for example, maintain communication between the device and the communication system even after inter-DU mobility of the UE.

A combination of the fourth embodiment and the sixth embodiment may be used. For example, in handover of a UE connected to a plurality of devices, some of the plurality of devices may continue to connect to the UE, and the remaining device(s) may switch the connection target UE to another UE. Such another UE may be a UE connected to a movement source base station for the UE to be handover. This can, for example, reduce load on the UE.

As another example, switching of the device connection target UE may be performed after handover of the UE. This enables, for example, complexity in the communication system to be avoided.

The UE may suspend the notification of information related to a measurement result of a signal from the device. For example, the UE may suspend the notification in handover. The UE may resume the notification after completion of the handover. This enables, for example, complexity of processing in the communication system to be avoided.

According to the sixth embodiment, communication between the device and the core NW apparatus can be continued even in a case of handover of a UE to which the device is connected.

### Seventh Embodiment

A UE to which a device is connected may be switched from a UE connected to a 3GPP network to a non-3GPP terminal.

Determination of the switching may be performed by a base station. The base station may request a core NW apparatus to perform a device search. The core NW apparatus may request a Non-3GPP InterWorking Function (N3IWF) (see NPL 10) to perform a device search.

Device search processing and processing related to response thereto may be performed among the N3IWF, non-3GPP access apparatus, the non-3GPP terminal, and the device.

The N3IWF may transmit, to the core NW apparatus, information related to a measurement result of the device. The measurement result may be, for example, a result of measurement by the non-3GPP terminal.

The base station may request the core NW apparatus to perform device mobility. The request may include information related to a switching target network, for example, a non-3GPP network, or may include information related to a switching target terminal, for example, the non-3GPP terminal. The core NW apparatus may request the N3IWF to perform device mobility.

Device switching-related processing may be performed among the N3IWF, the non-3GPP access apparatus, the non-3GPP terminal, and the device.

The N3IWF may transmit, to the core NW apparatus, a response to the device mobility request.

The UE may transmit, to the core NW apparatus, data for the device. The core NW apparatus may forward the data to the N3IWF. The N3IWF may forward the data to the non-3GPP access apparatus. The non-3GPP access apparatus may forward the data to the device via the non-3GPP terminal.

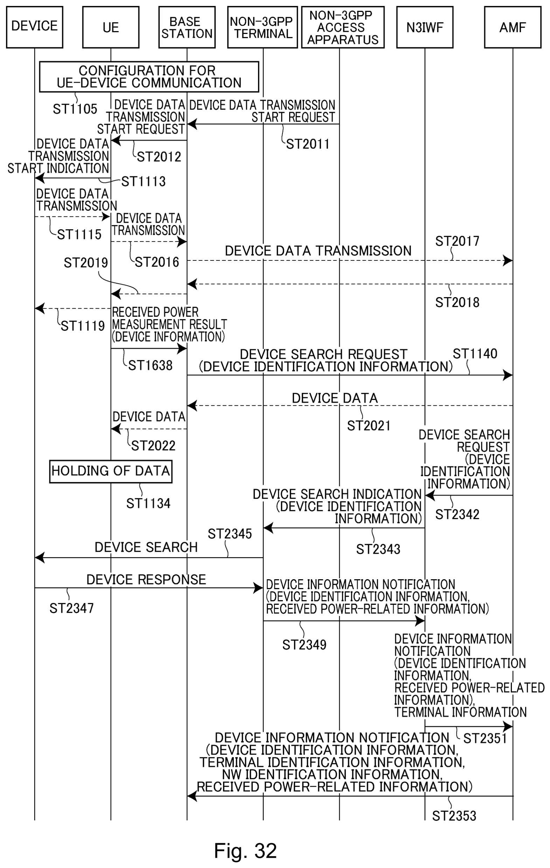

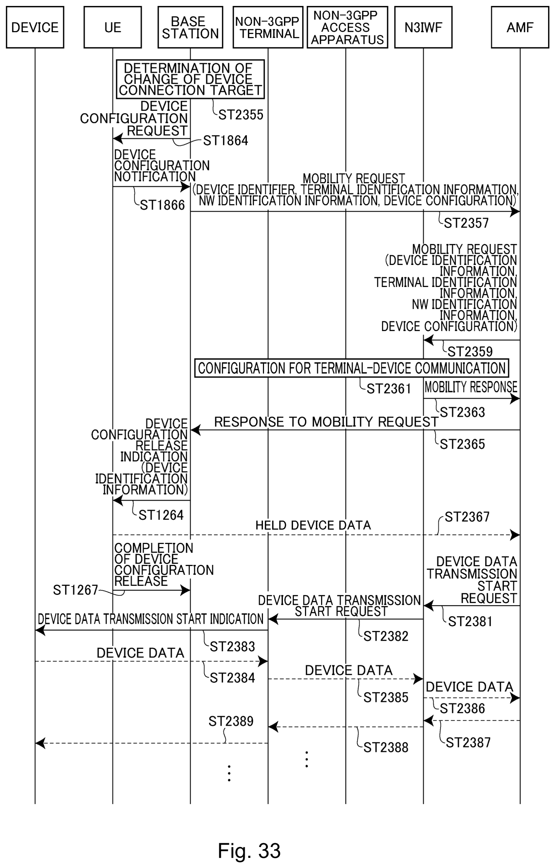

Figs. 32 and 33 are diagrams of a sequence illustrating an example of operation in which the UE to which the device is connected is switched from a UE connected to the 3GPP network to the non-3GPP terminal. Figs. 32 and 33 illustrate the first half and the second half of the sequence, respectively. In Figs. 32 and 33, the same step numbers are applied to the same processing as that of Figs. 11, 12, 27, and 28, and the common description thereof is omitted.

In Fig. 32, the UE may stop data transmission to the device in response to Step ST1638. In Step ST1134, the UE holds data for the device indicated by Step ST2022.

In Step ST2342 illustrated in Fig. 32, the AMF requests the N3IWF to perform a device search. The request may include information related to identification of the device.

In Step ST2343 illustrated in Fig. 32, the N3IWF indicates a device search to the non-3GPP terminal. In Step ST2345 and Step ST2347, the same processing as that of Step ST2044 and Step ST2046 in Fig. 27 is performed between the device and the non-3GPP terminal. In Step ST2349, the non-3GPP terminal notifies the N3IWF of information related to a measurement result of the device. In Step ST2351, the N3IWF notifies the AMF of information related to a measurement result of the device. The information related to the measurement result may include information related to identification of the device or may include information related to identification of the non-3GPP terminal. In Step ST2353, the AMF notifies the base station of information related to a measurement result of the device. The notification may include the same information as the information included in the notification in Step ST2351 or may include information related to the non-3GPP network.

In Step ST2355 illustrated in Fig. 33, the base station determines switching of a connection target of the device.

In Step ST2357 illustrated in Fig. 33, the base station requests the AMF to perform device mobility. The request may include information related to a switching target network, for example, a non-3GPP network, or may include information related to a switching target terminal, for example, the non-3GPP terminal. In Step ST2359, the AMF may request the N3IWF to perform device mobility. The request may include the same information as the information included in the request in Step ST2357.

In Step ST2361 illustrated in Fig. 33, device switching-related processing is performed among the N3IWF, the non-3GPP access apparatus, and the non-3GPP terminal.

In Step ST2363 illustrated in Fig. 33, the N3IWF transmits, to the AMF, a response to Step ST2359. In Step ST2365, the AMF transmits, to the base station, a response to Step ST2357.

In Step ST2367 illustrated in Fig. 33, the UE transmits, to the AMF, data for the device. The data may be the data held by the UE in Step ST1134.

In Step ST2381 and Step ST2382 illustrated in Fig. 33, the same processing as that of Step ST1272 in Fig. 24 is performed to the non-3GPP terminal via the N3IWF and the non-3GPP access apparatus. In Step ST2383, the same processing as that of Step ST1273 in Fig. 24 is performed from the non-3GPP terminal to the device.

In Steps ST2384 to ST2386 illustrated in Fig. 33, data from the device to the AMF are transmitted via the non-3GPP network. In Steps ST2387 to ST2389, data from the AMF to the device are transmitted via the non-3GPP network.

Figs. 32 and 33 illustrate the example in which the UE stops data transmission to the device in response to Step ST1638, but the UE may stop data transmission to the device in response to a device configuration request indicated by Step ST1864 or in response to device configuration release indication indicated by Step ST1264. This can, for example, shorten time to stop data transmission from the UE to the device.

In the example illustrated in Figs. 32 and 33, the device may stop data transmission to UE #1 in response to receiving a device search signal from the non-3GPP terminal indicated by Step ST2345, in response to transmitting a response to a device search signal to the non-3GPP terminal indicated by Step ST2347, or in response to receiving a device data transmission start indication from the non-3GPP terminal indicated by Step ST2383.

As another example, the stop of the data transmission from the device to UE #1 may be performed in response to notification of a received power measurement result indicated by Step ST1638, in response to a device configuration request from the base station to UE #1 indicated by Step ST1864, or in response to device configuration release indication from the base station to UE #1 indicated by Step ST1264. In response to the foregoing, UE #1 may indicate, to the device, a stop of data transmission.

As another solution, determination of the switching may be performed by the core NW apparatus. Processing for the switching may use a combination of the method disclosed in the fifth embodiment and the above-described method.

According to the seventh embodiment, communication between the device and the core NW apparatus can be continued even in a case where a connection target of the device is switched to a non-3GPP terminal.

The present disclosure has disclosed a device search, but may be applied to device confirmation or device detection.

In the present disclosure, one or a plurality of cells may be configured in one gNB. In the present disclosure, although there is a description of the gNB or the cell, it may be the gNB or may be the cell, unless otherwise specifically noted.

In the present disclosure, the gNB may be the MCG or the SCG.

The embodiments and their alterations described above are merely illustrative, and the embodiments and their alterations can be freely combined. Any component in the embodiments and their alterations can be modified or omitted as appropriate.

For example, in the embodiments and their alterations described above, a slot is an example of a time unit of communication in the fifth generation communication system. The slot may be a scheduling unit. In the embodiments and their alterations described above, processing described to be performed in a slot unit may be performed in a TTI unit, a subframe unit, a sub-slot unit, or a mini-slot unit.

For example, the methods disclosed in the embodiments and their alterations described above may be applied to the IAB. They may be applied to communication between the IAB donor and the IAB node. They may be applied to processing using Uu in the IAB.

For example, the methods disclosed in the embodiments and their alterations described above may be applied to communication between a UE and a UE or a UE and a NW via relay using SL communication.

For example, the methods disclosed in the embodiments and their alterations described above may be applied not only to a vehicle-to-everything (V2X) service but also to services using SL communication. For example, they may be applied to SL communication used in various services, such as a proximity-based service, public safety, inter-wearable terminal communication, and inter-device communication in a factory.

Various aspects of the present disclosure are summarized below as supplementary notes.

### (Supplementary Note 1)

A communication system including:
a base station configured to support a fifth generation radio access system;
communication terminals configured to be connected to the base station; and
a device configured to be connected to the base station, wherein
in a case where a connection between the device and the communication terminal is in a disconnected state, a plurality of the communication terminals perform processing to search for the device, and a communication terminal that has been successful in searching for the device operates as a communication terminal being a connection target of the device.

### (Supplementary Note 2)

The communication system according to Supplementary Note 1, wherein
in a case where communication with the base station is made unavailable during connection to the device, the communication terminal stops communication with the device.

### (Supplementary Note 3)

The communication system according to Supplementary Note 1, wherein
in a case where communication with the base station is made unavailable during connection to the device, the communication terminal continues to communicate with the device, and holds data received from the device, and
in a case where the communication with the base station has recovered, the communication terminal transmits the held data to the base station.

### (Supplementary Note 4)

The communication system according to Supplementary Note 1, wherein
in a case where communication with the base station is made unavailable during connection to the device, the communication terminal continues to communicate with the device, and holds data received from the device, and
in a case where the communication with the base station has not recovered and in a case where the device has been connected to another communication terminal, the communication terminal discards the held data.

### (Supplementary Note 5)

The communication system according to any one of Supplementary Notes 1 to 4, wherein
the device is connected to a plurality of the communication terminals, and transmits and receives same data via each of the connected plurality of communication terminals.

### (Supplementary Note 6)

The communication system according to Supplementary Note 5, wherein
in a case where the device receives same data from the plurality of communication terminals, the device retains one of the received same data and discards the other data, and
a core network apparatus retains one of same data transmitted by the device via the plurality of communication terminals and discards the other data.

### (Supplementary Note 7)

The communication system according to any one of Supplementary Notes 1 to 6, wherein
the communication terminal transmits, to the base station or a core network apparatus, information related to a measurement result of received power of a signal from the device, and
the base station or the core network apparatus that has received the information related to the measurement result determines, based on the information related to the measurement result, whether switching of a connection target of the device is necessary.

### (Supplementary Note 8)

The communication system according to Supplementary Note 7, wherein
in a case where the base station determines, based on the information related to the measurement result, that switching of the connection target of the device is necessary, the base station determines the communication terminal to be a new connection target of the device.

### (Supplementary Note 9)

The communication system according to Supplementary Note 8, wherein
in a case where the communication terminal determined to be the new connection target of the device is connected to another base station, the base station transmits, to the another base station, information related to the communication terminal determined to be the new connection target of the device and information related to the device.

### (Supplementary Note 10)

The communication system according to Supplementary Note 7, wherein
in a case where the base station determines, based on the information related to the measurement result, that switching of the connection target of the device is necessary, the base station determines another base station to which the communication terminal to be a new connection target of the device is connected, and transmits, to the another base station, information related to the device, and
the another base station determines, based on the information related to the device, the communication terminal to be a new connection target of the device.

### (Supplementary Note 11)

The communication system according to any one of Supplementary Notes 1 to 8, wherein
in a case where the communication terminal connecting to the base station and connecting to the device performs handover to another base station, the base station transmits information related to the device to the another base station, and
the another base station determines, based on the information related to the device, a configuration used for communication between the device and the communication terminal.

### (Supplementary Note 12)

The communication system according to any one of Supplementary Notes 1 to 9, wherein
in a case where the connection target of the device is switched to a communication terminal of another communication system of a type different from the fifth generation radio access system, the base station transmits, to a core network apparatus, information related to the device and information related to the another communication system, and
the core network apparatus forwards, to the another communication system, the information related to the device and the information related to the another communication system received from the base station.

### Reference Signs List

- 202: Communication Terminal Apparatus (Mobile Terminal),
- 210: Communication System,
- 213, 240-1, 240-2, 750: Base Station Apparatus (NR Base Station, Base Station),
- 214: 5G Core Unit,
- 215: Central Unit,
- 216: Distributed Unit,
- 217: Control-Plane Central Unit,
- 218: User-Plane Central Unit,
- 219: TRP,
- 301, 403: Protocol Processing Unit,
- 302: Application Unit,
- 304, 405: Encoder Unit,
- 305, 406: Modulating Unit,
- 306, 407: Frequency Converting Unit,
- 307-1 to 307-4, 408-1 to 408-4: Antenna,
- 308, 409: Demodulating Unit,
- 309, 410: Decoder Unit,
- 310, 411, 526: Control Unit,
- 401: EPC Communication Unit,
- 402: Other Base Station Communication Unit,
- 412: 5GC Communication Unit,
- 521: Data Network Communication Unit,
- 522: Base Station Communication Unit,
- 523: User Plane Communication Unit,
- 523-1: PDU Processing Unit,
- 523-2: Mobility Anchoring Unit,
- 525: Control Plane Control Unit,
- 525-1: NAS SECURITY UNIT,
- 525-2: Idle State Mobility Management Unit,
- 527: Session Management Unit,
- 527-1: PDU Session Control Unit,
- 527-2: UE IP Address Assigning Unit,
- 751-1 to 751-8: Beam,
- 752: Cell.

## Claims

1. A communication system comprising:
a base station configured to support a fifth generation radio access system;
communication terminals configured to be connected to the base station; and
a device configured to be connected to the base station, wherein
in a case where a connection between the device and the communication terminal is in a disconnected state, a plurality of the communication terminals perform processing to search for the device, and a communication terminal that has been successful in searching for the device operates as a communication terminal being a connection target of the device.

2. The communication system according to claim 1, wherein
in a case where communication with the base station is made unavailable during connection to the device, the communication terminal stops communication with the device.

3. The communication system according to claim 1, wherein
in a case where communication with the base station is made unavailable during connection to the device, the communication terminal continues to communicate with the device, and holds data received from the device, and
in a case where the communication with the base station has recovered, the communication terminal transmits the held data to the base station.

4. The communication system according to claim 1, wherein
in a case where communication with the base station is made unavailable during connection to the device, the communication terminal continues to communicate with the device, and holds data received from the device, and
in a case where the communication with the base station has not recovered and in a case where the device has been connected to another communication terminal, the communication terminal discards the held data.

5. The communication system according to claim 1, wherein
the device is connected to a plurality of the communication terminals, and transmits and receives same data via each of the connected plurality of communication terminals.

6. The communication system according to claim 5, wherein
in a case where the device receives same data from the plurality of communication terminals, the device retains one of the received same data and discards the other data, and
a core network apparatus retains one of same data transmitted by the device via the plurality of communication terminals and discards the other data.

7. The communication system according to any one of claims 1 to 6, wherein
the communication terminal transmits, to the base station or a core network apparatus, information related to a measurement result of received power of a signal from the device, and
the base station or the core network apparatus that has received the information related to the measurement result determines, based on the information related to the measurement result, whether switching of a connection target of the device is necessary.

8. The communication system according to claim 7, wherein
in a case where the base station determines, based on the information related to the measurement result, that switching of the connection target of the device is necessary, the base station determines the communication terminal to be a new connection target of the device.

9. The communication system according to claim 8, wherein
in a case where the communication terminal determined to be the new connection target of the device is connected to another base station, the base station transmits, to the another base station, information related to the communication terminal determined to be the new connection target of the device and information related to the device.

10. The communication system according to claim 7, wherein
in a case where the base station determines, based on the information related to the measurement result, that switching of the connection target of the device is necessary, the base station determines another base station to which the communication terminal to be a new connection target of the device is connected, and transmits, to the another base station, information related to the device, and
the another base station determines, based on the information related to the device, the communication terminal to be a new connection target of the device.

11. The communication system according to claim 1, wherein
in a case where the communication terminal connecting to the base station and connecting to the device performs handover to another base station, the base station transmits information related to the device to the another base station, and
the another base station determines, based on the information related to the device, a configuration used for communication between the device and the communication terminal.

12. The communication system according to claim 1, wherein
in a case where the connection target of the device is switched to a communication terminal of another communication system of a type different from the fifth generation radio access system, the base station transmits, to a core network apparatus, information related to the device and information related to the another communication system, and
the core network apparatus forwards, to the another communication system, the information related to the device and the information related to the another communication system received from the base station.
